# EUROPEAN PATENT SPECIFICATION

(11) **EP 4 377 671 B1**
(45) Date of publication and mention of the grant of the patent: **26.08.2026**
(21) Application number: 22754439.2
(22) Date of filing: 29.07.2022
(51) Int. Cl.: G01N 15/14, G01N 15/1404, G01N 15/1409, G01N 15/1433

(54) **DETECTION OF CELL AGGREGATES USING QUANTITATIVE PHASE-CONTRAST MICROSCOPY**
NACHWEIS VON ZELLAGGREGATEN MITTELS QUANTITATIVER PHASENKONTRASTMIKROSKOPIE
DÉTECTION D'AGRÉGATS CELLULAIRES AU MOYEN DE LA MICROSCOPIE QUANTITATIVE À CONTRASTE DE PHASE

(30) Priority: 29.07.2021 EP 21188590; 01.04.2022 EP 22166377
(43) Date of publication of application: 05.06.2024
(73) Proprietor: Technische Universität München, 80333 München (DE)
(72) Inventor: HAYDEN, Oliver, 85368 Moosburg (DE); ERBER, Johanna, 81373 München (DE); RASCH, Sebastian, 82256 Fürstenfeldbruck (DE); LAHMER, Tobias, 85551 Kirchheim bei München (DE); RÖHRL, Stefan, 93342 Reißing (DE); KLENK, Christian, 85521 Ottobrunn (DE)
(74) Representative: Lucke, Andreas
(86) International application number: PCT/EP2022/071445
(87) International publication number: WO 2023/006996

(56) References cited:
- WO-A1-2017/167361
- WO-A2-01/48455
- WO-A2-2014/146062

## Description

### FIELD OF THE INVENTION

The present invention is in the field of biomedical research and clinical diagnostics. In particular, the invention relates to a method for detecting cell aggregates of biological cells using a quantitative phase-contrast microscope and to a device for detecting cell aggregates of biological cells.

### BACKGROUND

Conventional blood counts determine parameters such as the numbers of red blood cells, platelets, white blood cells and subtypes thereof in a blood sample of a patient, which may be used for diagnosing many different diseases. Recent studies suggest that aggregates of blood cells such as leukocyte-platelet aggregates and leukocyte aggregates may also serve as useful biomarkers for a variety of pathological conditions such as cardiovascular diseases and bacterial or viral infections, see e.g. M. Finsterbusch et al., Platelets. 2018 Nov;29(7):677-685, J. G. Burel et al., eLife 2019;8:e46045, and Michelson et al, Circulation. 2001;104:1533-1537*.*

A reliable detection of blood cell aggregates, however, is challenging since the aggregates are fragile objects and may disintegrate easily. This prevents an analysis using traditional methods for performing blood counts such as Mie scattering or fluorescence-based flow cytometry, which may require a complex and time-consuming sample preparation involving a selective lysis of erythrocytes, a staining of cell constituents and/or a fluorescent labeling. The sample preparation as well as the measurement itself may affect cell morphology and may lead to a disintegration of cell aggregates, e.g. due to mechanical forces exerted thereon during centrifugation or flow cytometry at high flow rates (typically 1-10 m/s) required for sufficient statistics on individual cells.

Digital holographic microscopy uses interference between an imaging beam and a reference beam to obtain phase as well as amplitude information of light transmitted by a sample and for example allows for reconstructing a quantitative phase shift image of the sample, see e.g. EP 1524 491 A1 and EP 2 357 539 A1. In recent years, digital holographic microscopes have successfully been employed for biomedical applications such as live cell imaging. Phase shift images of cells may be used to reliably identify cell types based on the analysis of morphological parameters and/or using machine learning classifiers. In combination with microfluidic systems, this for example allows for performing high-throughput label-free blood sample analyses such as blood counts, see e.g. US 2019/0195774 A1, facilitating the diagnosis of diseases like malaria, leukemia, and myeloproliferative neoplasms, see for example M. Ugele et al., Adv. Sci. 1800761 (2018*),* WO 2019/063548 A1 and M. Ugele et al., Proc. SPIE 11060, Optical Methods for Inspection, Characterization, and Imaging of Biomaterials IV, 110600V (2019*).* Furthermore, digital holographic microscopy has already been used to perform a quantitative analysis of platelet aggregates adhering to a surface, see e.g. WO 2016/170180 A1. The currently known methods, however, either do not allow for a reliable detection of cell aggregates or are not suitable for performing automated high-throughput analyses in a clinical setting. Moreover, these methods only provide limited information regarding the composition of the cell aggregates and may thus not be suitable for obtaining clinically relevant information, which may e.g. require an analysis of single platelets as well as large platelet-platelet aggregates at the same time.
WO 2017/167361 A1 discloses a method for aligning non-spherical biological entities such as red blood cells in a desired region within a flow chamber of a flow cell. The method comprises generating a pair of laminar sheath flows sandwiching a sample flow comprising said entities, wherein the laminar sheath flows are generated from viscoelastic fluids.

### SUMMARY OF THE INVENTION

The present invention relates to a method for detecting cell aggregates of biological cells, as defined in claim 1, and to a device for detecting cell aggregates of biological cells, as defined in claim 11. Preferred features of the invention are set out in the dependent claims.

Further, an object of the present disclosure is to provide a method that allows for a fast
and reliable detection of biological cells and cell aggregates and is suitable for performing automated high-throughput analyses in a clinical setting.

This object is met by a method for detecting cell aggregates of biological cells using a quantitative phase-contrast microscope according to a first example useful for understanding the present invention and a device for detecting cell aggregates of biological cells according to the first example useful for understanding the present invention (referred to as the method and device, respectively, according to the first aspect of the present disclosure in the following).

The method for detecting cell aggregates of biological cells using a quantitative phase-contrast microscope according to the first aspect of the present disclosure comprises preparing a suspension comprising biological cells from a sample and a viscoelastic fluid. The viscoelastic fluid comprises a shear-thinning polymer having a molecular weight between 2 MDa and 10 MDa, wherein a mass fraction of the shear-thinning polymer in the suspension is less than 0.2%. The method further comprises generating a flow of the suspension along a microfluidic channel to viscoelastically focus cell aggregates in the suspension in a focal plane of the quantitative phase-contrast microscope. One or more phase shift images of the biological cells in the suspension are taken using the quantitative phase-contrast microscope and cell aggregates in the one or more phase shift images are identified.

The method may for example be performed using a device for detecting cell aggregates of biological cells according to any one of the embodiments and examples described below. The sample may be a sample extracted from a patient, in particular a liquid sample such as a blood sample. Accordingly, the biological cells may for example be or comprise blood cells, e.g. red blood cells (erythrocytes), white blood cells (leukocytes) and/or platelets (thrombocytes), and/or rare cells such as circulating tumor cells and/or circulating endothelial cells.

The suspension may be prepared by adding the viscoelastic fluid to the sample or to cells extracted from the sample or vice-versa. The viscoelastic fluid is a fluid that has both viscous and elastic properties, i.e. may exhibit properties of a viscous fluid as well as properties of an elastic solid. The viscoelastic fluid may be a non-Newtonian fluid exhibiting a viscosity that depends on the applied shear rate, in particular a shear-thinning fluid exhibiting a viscosity that decreases with the applied shear rate. The viscoelastic properties of the viscoelastic fluid may result from the shear-thinning polymer contained therein at least in part. The viscoelastic fluid may for example be an aqueous solution comprising the shear-thinning polymer, e.g. a solution consisting of water or phosphate buffered saline and the shear-thinning polymer.

The viscoelastic properties of the viscoelastic fluid may lead to viscoelastic focusing of objects such as cells and/or cell aggregates contained in the suspension when generating a flow of the suspension. The objects in the flow may for example migrate towards regions in which the shear rate is low, e.g. a center region of the flow of the suspension, in which the suspension has the highest flow velocity. In the microfluidic channel, this may for example be in the vicinity of a central plane between two opposing sidewalls of the microfluidic channel or in the vicinity of a centerline between two pairs of opposing sidewalls of the microfluidic channel.

The viscoelastic focusing of cells and/or cell aggregates within the flow of the suspension is adapted such that cells and/or cell aggregates in the suspension are focused in the focal plane of the quantitative phase-contrast microscope. For example, the viscoelastic fluid may lead to viscoelastic focusing of cells and/or cell aggregates at the center of the flow of the suspension, e.g. in the vicinity of the central plane or the centerline of the microfluidic channel. In some examples, the central plane and/or the centerline of the microfluidic channel may lie in the focal plane of the quantitative phase-contrast microscope. The cell aggregates in the suspension may be focused such that centers of the cell aggregates are confined to within a confinement range in a direction perpendicular to the focal plane of the microscope. For example, at least 90% of the cell aggregates, in one example at least 95% of the cell aggregates may be confined to within the confinement range. Preferably, the confinement range is less than 20 µm, in some examples less than 10 µm, in one example less than 5 µm. The confinement range may in particular be equal to or less than two times a depth of field of the microscope, in one example equal to or less than the depth of field of the microscope. In a preferred example, single cells are also focused in the focal plane of the microscope, e.g. such that at least 80% of single cells, in some examples at least 90% of single cells, in one example at least 95% of single cells are confined to within the confinement range.

The viscoelastic focusing with a shear-thinning polymer having a molecular weight between 2 MDa and 10 MDa at a mass fraction in the suspension of less than 0.2% may allow for a reliable focusing of cell aggregates as well as single cells while reducing mechanical stress on the cell aggregates and preventing a polymer-induced aggregation of cells. Focusing cell aggregates and in particular a combination of cell aggregates and single cells is challenging due to the different sizes that the cell aggregates and the cells may have. A size of the cell aggregates may e.g. range from 1 µm to 50 µm, while a size of the cells may range from 1 µm to 20 µm. Human platelets for example typically have a size between 1 µm and 3 µm, while white blood cells typically have a size between 7 µm and 15 µm. Forces acting on objects in a viscoelastic fluid may depend on the size of the object such that objects of different sizes may be focused at different points/locations or objects of a certain size may not be focused at all. At the same time, shear stress within a fluid flow may act on the cell aggregates and may break cell aggregates apart, in particular at higher flow velocities. This may limit a range of flow velocities that can be used, making it even more difficult to focus cell aggregates. Furthermore, shear-thinning polymers may affect cell morphology, see e.g. J. Gonzalez-Molina et al., Sci Rep 9, 8505 (2019*),* and may even induce the formation of "artificial" cell aggregates in some cases, e.g. for red blood cells as described in J. K. Armstrong et al., Biophysical Journal 87 (2004), 4259-4270*.* Surprisingly, the present inventors have found that adding a shear-thinning polymer with a molecular weight between 2 MDa and 10 MDa at a mass fraction of less than 0.2% induces a viscoelasticity in the suspension that enables sufficient confinement of cell aggregates in the suspension using viscoelastic focusing at reduced flow velocities to prevent disintegration of cell aggregates while at the same time not inducing a formation of "artificial" cell aggregates. Thereby, the present disclosure allows for studying cell aggregates and in particular aggregates of blood cells by quantitative phase-contrast microscopy without the need for cell fixation and red blood cell lysis. Furthermore, aggregates testing can be performed with standard blood draw procedures using conventional blood collection tubes.

For detecting cell aggregates, the method further comprises taking one or more phase shift images of the biological cells in the suspension using the quantitative phase-contrast microscope. The quantitative phase-contrast microscope may for example be a ptychographic imaging device or a digital holographic microscope, e.g. as detailed below for the device according to the first aspect of the present disclosure. Taking the one or more phase shift images may for example comprise capturing a sequence of images of a measurement volume along the microfluidic channel while the suspension flows along said microfluidic channel. As used herein, a phase shift image may encode a phase shift of light at one or more wavelengths as a function of position, e.g. a phase shift of light reflected off or propagating through an imaging sample such as the flow of the suspension as a function of the position in the imaging sample. In a preferential setting and contrary to conventional flow cytometry with serial cell measurements, multiple cells and/or cell aggregates are imaged in parallel to compensate for a reduced throughput due to the lower flow rates.

The one or more phase shift images may be analyzed to identify cell aggregates therein, e.g. to distinguish cell aggregates from single cells. Cell aggregates may for example be identified based on one or more morphological parameters pertaining to their size, shape and/or structure, for example a mean diameter (equivalent diameter) and/or a phase shift (optical height), e.g. by defining one or more thresholds for the respective parameters. Additionally or alternatively, cell aggregates may also be identified using classical and/or artificial intelligence-based (AI-based) computer vision techniques, e.g. using a neural network-based classifier. Identifying cell aggregates in the one or more phase shift images may in particular comprise determining a total number or fraction of cell aggregates in the one or more phase shift images, wherein the fraction of cell aggregates may e.g. be the ratio of the total number of cell aggregates to the total number of single cells and cell aggregates.

In a preferred example, identifying the cell aggregates in the one or more phase shift images comprises determining a number of cells in the respective cell aggregate and/or a cell type of some or all of the cells in the respective cell aggregate. This may for example comprise performing an image segmentation on a portion of a phase shift image associated with the cell aggregate, e.g. a region-of-interest containing only the cell aggregate but no other single cells or cell aggregates, to identify constituents of the cell aggregate. The image segmentation may for example be performed using a thresholding algorithm, e.g. based on one or more thresholds for the phase shift to assign portions of the phase shift image to a respective constituent, and/or using a watershed algorithm, e.g. by interpreting the phase shift as a topographic height and identifying "basins" within the resulting topographic map as constituents of the cell aggregate. Additionally or alternatively, the image segmentation may also be performed using an edge-based method such as geodesic active contours, see e.g. P. Marquez-Neila, L. Baumela, and L. Alvarez, "A morphological approach to curvaturebased evolution of curves and surfaces", In: IEEE Transactions on Pattern Analysis and Machine Intelligence 36.1 (2013), pp. 2-17*, a* region-based method such as the Chan-Vese algorithm, see e.g. T. Chan and L. Vese, "An active contour model without edges", In: International Conference on Scale-Space Theories in Computer Vision, Springer, 1999, pp. 141-151*,* and/or a graph-based method such as the Felzenszwalb algorithm, see e.g. P. F. Felzenszwalb and D. P. Huttenlocher, "Efficient graph-based image segmentation", In: International journal of computer vision 59.2 (2004), pp. 167-181. Additionally or alternatively, the image segmentation may also be performed using AI-based computer vision techniques, e.g. using a neural network such as the U-Net, see e.g. O. Ronneberger, P. Fischer, and T. Brox, "U-Net: Convolutional networks for biomedical image segmentation", In: International Conference on Medical image computing and comput-erassisted intervention, Springer, 2015, pp. 234-241*,* the Mask R-CNN, see e.g. K. He, G. Gkioxari, P. Dollar, and R. Girshick, "Mask RCNN", In: Proceedings of the IEEE international conference on computer vision, 2017, pp. 2961-2969*,* and/or a pulse-coupled neural network, see e.g. M. Chen, X. Yu, and Y. Liu, "PCNN: Deep convolutional networks for short-term traffic congestion prediction", In: IEEE Transactions on Intelligent Transportation Systems 19.11 (2018), pp. 3550-3559*.* Depending on the depth-of-field of the quantitative phase-contrast microscope, aggregate analysis may be adapted to the needs on lateral resolution (e.g. highest for platelets) versus the aggregate height information depending on wavelength and numerical aperture. Histograms of aggregate size distribution and/or cellular composition can be plotted. e.g. in cases of assays using activating substances or detailed analysis of patient samples.

The method may further comprise determining one or more morphological parameters for some or all of the constituents of the cell aggregate, e.g. from the segmented image. The one or more morphological parameters may for example comprise a minimum diameter, a mean diameter, a maximum diameter, a circumference, an aspect ratio, a minimum phase shift, a mean phase shift, a maximum phase shift, a variation or standard deviation of the phase shift and/or a correlation length of the phase shift. The one or more morphological parameters may in particular comprise one or more texture features such as an entropy or homogeneity, an energy, one or more features extracted from a co-occurrence matrix such as a gray level co-occurrence matrix (GLCM) and/or one or more Haralick features. In some examples, the one or more morphological parameters may be extracted using AI-based computer vision techniques, e.g. using a neural network for feature extraction.

The method may also comprise determining the cell type of some or all of the constituents of the cell aggregate, e.g. based on the one or more morphological parameters. The cell type may for example be determined using one or more thresholds for the respective morphological parameters. Additionally or alternatively, the cell type may be determined using a regression analysis, a linear discriminant analysis, a decision tree classification a random forest classification, a support vector machine (SVM), a quadratic discriminant analysis, a K-means clustering, a logistic regression and/or a naive Bayes classifier. In some examples, the cell type may additionally or alternatively be determined using AI-based computer vision techniques, e.g. using a neural network-based classifier.

In a preferred example, the method may also comprise identifying single cells in the one or more phase shift images, e.g. similar to the identification of cell aggregates described above. Single cells and cell aggregates may for example be distinguished based on one or more morphological parameters pertaining to their size, shape and/or structure, and/or may be distinguished using classical and/or AI-based computer vision techniques. The method may further comprise determining a cell type of the single cells, e.g. similar to the determination of the cell type for constituents of a cell aggregate described above.

The shear-thinning polymer may have a molecular weight between 3 MDa and 6 MDa in some examples, preferably a molecular weight between 3.5 MDa and 4.5 MDa, in one example a molecular weight of 4.0 MDa, with Da being the unified atomic mass unit (u). Increasing the molecular weight of the polymer may facilitate viscoelastic focusing of objects, but at the same time may also lead to an increase in the rate of polymer-induced formation of "artificial" cell aggregates as well as to increased mechanical stress on the cell aggregates due to interactions with the polymers in the suspension. The inventors have found that using a shear-thinning polymer with a molecular weight in these ranges is particularly advantageous for achieving sufficient confinement of both cell aggregates and single cells in the suspension even at low flow velocities and without inducing a formation of "artificial" cell aggregates. Preferably, the shear-thinning polymer is a linear polymer, e.g. a polymer comprising a single unbranched linear chain.

The mass fraction of the shear-thinning polymer in the suspension may be between 0.03% and 0.12% in some examples, preferably between 0.04% and 0.06%, in one example 0.05%. The mass fraction of a given constituent of the suspension may for example be defined as the ratio of the combined mass of the respective constituent in the suspension and the total mass of the suspension, i.e. the sum of the combined masses of each of the constituents of the suspension. Increasing the mass fraction of the shear-thinning polymer may facilitate viscoelastic focusing of objects, but at the same time may also lead to an increase in the rate of polymer-induced formation of "artificial" cell aggregates as well as to increased mechanical stress on the cell aggregates due to interactions with the polymers in the suspension. The inventors have found that using a shear-thinning polymer with a mass fraction in these ranges is particularly advantageous for achieving sufficient confinement of both cell aggregates and single cells in the suspension even at low flow velocities and without inducing a formation of cell aggregates.

Preferably, the shear-thinning polymer is a water soluble polymer. The shear-thinning polymer may for example be selected from the group consisting of poly(ethylene oxide) (PEO), poly(vinyl pyrrolidone) (PVP), hyaluronic acid (HA) and polyacrylamide (PAA). Preferably, the shear-thinning polymer is poly(ethylene oxide) or poly(vinyl pyrrolidone). In one example, the shear-thinning polymer is 4 MDa water soluble linear polymer PEO at a mass fraction of 0.05% in the suspension. In another example, the shear-thinning polymer is 4 MDa water soluble linear polymer PEO at a mass fraction of 0.2% in the suspension. In some examples, the viscoelastic fluid may comprise one or more additional shear-thinning polymers, wherein the additional shear thinning polymers may e.g. comprise a polymer of the same type, but with a different molecular weight (e.g. PEO with molecular weights distributed within a range of 3 MDa to 6 MDa) and/or a polymer of a different type with the same or a different molecular weight (e.g. PVP with a molecular weight of 2 MDa in addition to PEO with a molecular weight of 4 MDa). In such examples, a combined mass fraction of all shear-thinning polymers in the suspension may be less than 0.2%, preferably between 0.03% and 0.12%, in one example between 0.04% and 0.06%, and/or a molecular weight of some or all of the shear-thinning polymers may be within the range of 2 MDa and 10 MDa, preferably between 3 MDa to 6 MDa, in one example between 3.5 MDa and 4.5 MDa.

In a preferred example, a flow velocity of the suspension along the microfluidic channel is chosen such that a shear stress within the flow is below 50 Pa, preferably below 10 Pa, in one example below 5 Pa. A shear rate within the flow of the suspension in the microfluidic channel, e.g. a gradient of the flow velocity, may for example be smaller than 10,000 s⁻¹, in some examples smaller than 5,000 s⁻¹, in one example smaller than 2,000 s⁻¹. A flow velocity of the suspension may for example be between 1 mm/s and 1.0 m/s, preferably between 1 mm/s and 250 mm/s, in some examples between 5 mm/s and 100 mm/s, in one example between 8 mm/s and 64 mm/s.

In some examples, a length from an inlet of the microfluidic channel to a focal point of the quantitative phase-contrast microscope is between 30 mm and 60 mm, preferably between 35 mm and 50 mm. The inlet of the microfluidic channel may for example be an input port for providing the suspension to the microfluidic channel or a junction between two or more channels merging into the microfluidic channel, e.g. a hydrodynamic focusing junction. In some examples, the microfluidic channel may be straight or substantially straight, wherein the inlet of the microfluidic channel may for example also be a curved channel portion at the beginning of the microfluidic channel. Choosing a length of the microfluidic channel within the aforementioned ranges may for example facilitate a stable (viscoelastic) focusing even of smaller objects such as single cells and in particular platelets.

Preferably, a height of the flow of the suspension in a direction perpendicular to the focal plane of the quantitative phase-contrast microscope is between 30 µm and 100 µm, in some examples between 30 µm and 70 µm, in one example between 40 µm and 60 µm, e.g. 50 µm. The height of the flow of the suspension may for example be measured at the focal point of the quantitative phase-contrast microscope and may e.g. be the distance between sidewalls of the microfluidic channel that are in contact with the flow of the suspension, between interfaces between the flow of the suspension and one or more additional flows surrounding the flow of the suspension in the microfluidic channel or a combination thereof. The height of the flow of the suspension may for example be determined by a height of the microfluidic channel, which may e.g. be within the aforementioned ranges. Additionally or alternatively, the height of the flow of the suspension may also be controlled by hydrodynamic focusing by generating one or more sheath flows along the microfluidic channel, e.g. as described below. This may allow for generating a flow of the suspension having a height in the aforementioned ranges even in a microfluidic channel having a larger height. Choosing a height of the flow of the suspension within the aforementioned ranges may for example be advantageous to ensure a stable viscoelastic focusing of the cells and/or cell aggregates within the suspension.

In a preferred example, the method further comprises generating two or more sheath flows along the microfluidic channel to hydrodynamically focus the flow of the suspension such that cell aggregates in the suspension are focused in a focal plane of the quantitative phase-contrast microscope. In other words, in addition to the viscoelastic focusing of cells and/or cell aggregates within the flow of the suspension, the flow of the suspension itself may be focused hydrodynamically by generating two or more sheath flows along the microfluidic channel. The sheath flows may for example be generated such that the sheath flows flow between the flow of the suspension and a respective sidewall of the microfluidic channel, e.g. such that the flow of the suspension is sandwiched between a pair of sheath flows flowing along opposing sidefaces of the microfluidic channel. The sheath flows may be configured to confine the flow of the suspension in one or more directions, e.g. a direction perpendicular to the focal plane of the microscope and/or a direction parallel to the focal plane of the microscope. Hydrodynamically focusing the flow of the suspension may for example allow for reducing the height of the flow of the suspension in the microfluidic channel and/or preventing objects within the flow of the suspension such as single cells and/or cell aggregates from coming in contact with sidewalls of the microfluidic channel. Hydrodynamic focusing may for example be used if the height of the microfluidic channel is larger than 100 µm, preferably if the height of the microfluidic channel is larger than 70 µm, in some examples if the height of the microfluidic channel is larger than 60 µm, in one example if the height of the microfluidic channel is larger than 50 µm. Additionally or alternatively, hydrodynamic focusing may also be used to control a position of the flow of the suspension within the microfluidic channel, e.g. to displace or offset the flow of the suspension from a center plane or a centerline of the microfluidic channel.

In combination, the viscoelastic focusing of cells and/or cell aggregates within the flow of the suspension and the hydrodynamic focusing of the flow of the suspension may be adapted such that cells and/or cell aggregates in the suspension are focused in the focal plane of the quantitative phase-contrast microscope. For example, the flow velocities and/or the flow rates of the two or more sheath flows may be chosen such that the flow of the suspension is hydrodynamically focused in a center region of the microfluidic channel and the viscoelastic fluid may lead to viscoelastic focusing of cells and/or cell aggregates at the center of the flow of the suspension, e.g. in the vicinity of the central plane or the centerline of the microfluidic channel. In some examples, the central plane and/or the centerline of the microfluidic channel may lie in the focal plane of the quantitative phase-contrast microscope. In other examples, cells and/or cell aggregates in the suspension may be focused in a different region of the microfluidic channel, e.g. in the vicinity of a plane or line that is offset from the central plane or the centerline of the microfluidic channel, for example by choosing asymmetric flow velocities or flow rates for the two or more sheath flows.

In some examples, some or all of the two or more sheath flows may comprise a viscoelastic fluid, in particular a viscoelastic fluid comprising the same shear-thinning polymer as the suspension. A mass fraction of the shear-thinning polymer in the respective sheath flows may for example be equal to or smaller than the mass fraction of the shear-thinning polymer in the suspension.

In some examples, the flow of the suspension is hydrodynamically focused by generating a pair of lateral sheath flows sandwiching the flow of the suspension in a first direction and a pair of vertical sheath flows sandwiching the flow of the suspension in a second direction perpendicular to the first direction, e.g. to confine the flow of the suspension along both the first and second directions. Each of the lateral sheath flows may for example flow between the flow of the suspension and a respective vertical sidewall of the microfluidic channel. Each of the vertical sheath flows may for example flow between the flow of the suspension and a bottom and top wall of the microfluidic channel, respectively. In other examples, the flow of the suspension may be hydrodynamically focused using only the pair of lateral sheath flows or only the pair of vertical sheath flows, e.g. to confine the flow of the suspension along the first or along the second direction by hydrodynamic focusing, whereas confinement of the cells and/or of the cell aggregates along the other direction may for example be achieved by viscoelastic focusing. The second direction may for example be perpendicular to the focal plane of the quantitative phase-contrast microscope and may e.g. be parallel to an imaging axis of the quantitative phase-contrast microscope.

In a preferred example, the sample is a whole blood sample, e.g. unmodified blood extracted from a patient, or a blood fraction sample, e.g. a sample comprising one or more components of a whole blood sample such as blood plasma or fractions thereof, a buffy coat comprising leukocytes and platelets, and/or erythrocytes. In other examples, the sample may also be a sample of a different body fluid or a tissue sample extracted from a patient, in particular a tissue sample dissolved into single cells and/or into cell aggregates. The sample may e.g. be or comprise a human sample such as urine, effusions, lavage or sputum to perform cell aggregate tests thereon. In some examples, one or more coagulation-inhibiting substances, such as ethylenediamine tetra-acetic acid (EDTA), heparin or citrate, may be added to the whole blood sample or the blood fraction sample, respectively, to prevent coagulation.

Identifying cell aggregates in the one or more phase shift images may comprise identifying cell aggregates comprising or consisting of one or more predefined types of blood cells in the one or more phase shift images. Identifying cell aggregates in the one or more phase shift images may in particular comprise identifying platelet aggregates, i.e. aggregates consisting of platelets, leukocyte-platelet aggregates, i.e. aggregates consisting of one or more platelets and one or more leukocytes, and/or leukocyte aggregates, i.e. aggregates consisting of leukocytes. This may for example comprise identifying constituents of the cell aggregates in the one or more phase shift images, determining one or more morphological parameters for some or all of the constituents of the respective cell aggregates and determining the cell type of the respective constituents as described above. Additionally or alternatively, identifying cell aggregates in the one or more phase shift images may also comprise identifying cell aggregates comprising tumor cells, in particular cell aggregates comprising tumor cells and blood cells, for example cell aggregates consisting of tumor cells with platelets and/or leukocytes.

Additionally or alternatively, the method may also comprise determining a number of cell aggregates comprising at least a predefined number of cells of one or more certain types of cells, e.g. aggregates comprising at least a first number of cells of a first type or aggregates comprising at least the first number of cells of the first type and at least a second number of cells of a second type. In a preferred example, the method comprises determining a number of leukocyte-platelet aggregates comprising at least a predefined number of leukocytes, in particular two or more leukocytes or three or more leukocytes. Additionally or alternatively, the method may for example also comprise determining a number of leukocyte aggregates and leukocyte-platelet aggregates comprising two or more leukocytes and/or of leukocyte-platelet aggregates comprising two or more leukocytes and two or more platelets. The method may also comprise determining a number of cell aggregates consisting of a predefined number of cells of one or more certain types of cells, e.g. aggregates consisting of a first number of cells of a first type, aggregates consisting of the first number of cells of the first type and a second number of cells of a second type, and/or aggregates consisting of the first number of cells of the first type and at least the second number of cells of the second type, for example a number of leukocyte-platelet aggregates consisting of two leukocytes and one or more platelets or a number of leukocyte-platelet aggregates consisting of three leukocytes and one or more platelets. Additionally or alternatively, the method may further comprise determining a number of cell aggregates comprising at least a predefined number of cells, e.g. three or more cells, in one example four or more cells. The method may in particular comprise determining a number of leukocyte aggregates and/or of leukocyte-platelet aggregates comprising three or more cells. The presence of cell aggregates of a certain composition, e.g. having at least a given number of cells, may be associated with a certain medical condition or disease. For example, the presence of leukocyte-platelet aggregates comprising two or more leukocytes and in particular the presence of leukocyte-platelet aggregates comprising three or more leukocytes may indicate an infection. High concentrations of platelet-platelet aggregates may for example indicate complications of Covid-19 patients or patients with cardiovascular diseases.

In some examples, preparing the suspension comprises diluting the whole blood sample or the blood fraction sample, respectively, by a factor between 1:10 and 1:1000, preferably between 1:50 and 1:200, in one example between 1:80 and 1:120. Diluting whole blood or a blood fraction by a factor in these ranges may ensure that the cells and the cell aggregates in the suspension are sufficiently sparse such that the respective objects can easily be distinguished in the phase shift images while also providing a sufficiently high density of objects to allow for an analysis of a large number of objects.

In a preferred example, preparing the suspension does not comprise a lysis of erythrocytes, a sphering of platelets and/or of erythrocytes and/or a labelling or staining of cells. For example, preparing the suspension may only comprise adding the viscoelastic fluid to a blood sample, in particular a whole blood sample or a blood fraction sample, e.g. to dilute the blood sample by a factor within the ranges given above. This may enable a rapid processing of samples, e.g. to prevent spontaneous disintegration of cell aggregates from the sample. Furthermore, the aforementioned sample preparation procedures may affect cell morphology and/or may lead to the disintegration of cell aggregates from the sample. In some examples, one or more coagulation-inhibiting substances such as ethylenediamine tetra-acetic acid (EDTA) may be contained in the viscoelastic fluid and/or may be added to the blood sample.

In some examples, the method may further comprise adding a platelet- and/or leukocyte-activating substance to induce platelet aggregation and/or leukocyte-platelet aggregation, e.g. to study coagulation processes, or leukocyte function, e.g. to study morphological changes and aggregate formation. An increase or a decrease in a rate and/or in an extent of coagulation may for example be associated with certain pathological conditions. Samples from patients with coronary artery disease may e.g. exhibit stronger coagulation than samples from healthy individuals, see M. I. Furman et al., J. Am. Coll. Cardiol. Vol. 31, No. 3, 292-296 (2009*).* The platelet-activating substance may for example be selected from the group consisting of adenosine diphosphate (ADP), thrombin receptor activating peptide (TRAP), epinephrin, thrombin, Von-Willebrand-factor and C-reactive protein (CRP). Vice versa, inhibitors, such as Aspirin or Clopidogrel, can be added. Alternatively or in addition to platelet activation, leukocyte activating substances can be added, such as cytokines. Furthermore, drugs can be added, such as a checkpoint inhibitor, one or more antibody drug conjugates and/or one or more bispecific T-cell engaging antibody constructs, e.g. to study cell aggregation behavior and inhibition. In one example, the method may also comprise adding a substance that induces a formation of aggregates comprising tumor cells in combination with leukocytes and/or platelets.

According to the first aspect, the present disclosure further provides a device for detecting cell aggregates of biological cells using a method according to any one of the embodiments and examples described herein. The device comprises a mount that is configured to receive a microfluidic system comprising a measurement volume. The device further comprises a microscope configured to take phase shift images of biological cells in the measurement volume. The device also comprises a microfluidics unit configured to receive a sample fluid comprising biological cells from a sample and a viscoelastic fluid, wherein the viscoelastic fluid comprises a shear-thinning polymer having a molecular weight between 2 MDa and 10 MDa and wherein a mass fraction of the shear-thinning polymer in the sample fluid is less than 0.2%. The microfluidics unit is configured to generate a flow of the sample fluid through the measurement volume to viscoelastically focus cell aggregates in the sample fluid flow in a focal plane of the microscope The device further comprises a controller that is configured to identify cell aggregates in a phase shift image of the sample fluid flow obtained from the microscope.

The mount may be configured to hold the microfluidic system, e.g. at a fixed reference position relative to the microscope. Preferably, the mount is configured to position the microfluidic system relative to the microscope, e.g. to move the microfluidic system along one or more directions and/or to tilt the microfluidic system around one or more axes. In some examples, the mount may further comprise one or more fluid connectors for interfacing ports of the microfluidic system, e.g. one or more input ports and an output port of the microfluidic system. The measurement volume of the microfluidic system may e.g. be a microfluidic channel or a portion thereof. In some examples, the device may comprise the microfluidic system.

The microscope is a quantitative phase-contrast microscope, e.g. a digital holographic microscope or a ptychographic imaging device, that is configured to take phase shift images, i.e. images that encode a phase shift of light at one or more wavelengths as a function of position. Preferably, the microscope is configured to determine an absolute value of the phase shift. In other examples, the microscope may only be configured to determine the phase shift modulo 2π. The microscope may for example be configured to obtain the phase shift through interference of light, e.g. between a probe or an imaging beam and a reference beam. In other examples, the microscope may be a ptychographic imaging device that is configured to perform ptychographic imaging without a reference beam, e.g. by recording interference patterns without a reference phase. The microscope may be configured to take one or more interference images and to reconstruct a phase shift image from the one or interference images.

In a preferred example, the microscope is a digital holographic microscope, which is configured to take phase shift images as well as amplitude or intensity images, wherein an intensity image may encode an intensity of light as a function of position, e.g. an intensity of light reflected off or transmitted through an imaging sample such as the sample fluid flow as a function of the position in the imaging sample. The digital holographic microscope may for example be configured to interfere an image of the imaging sample, e.g. an imaging beam of light transmitted through the imaging sample, with a reference beam, wherein the reference beam may pass through the imaging sample or may not pass through the imaging sample. The digital holographic microscope may be configured to extract or reconstruct the phase shift and intensity images from one or more interference images, e.g. by reconstructing a wave front of light transmitted through or reflected off the imaging sample. The digital holographic microscope may be an on-axis digital holographic microscope, in which the imaging beam and the reference beam propagate along the same axis when interfering. Preferably, the digital holographic microscope is an off-axis digital holographic microscope, in which the imaging beam and the reference beam interfere under an angle and which may be configured to extract a phase shift image from a single interference image of the imaging sample. Such digital holographic microscopes are for example known from EP 1 524 491 A1 and EP 2 357 539 A1.

The microfluidics unit may for example comprise a reservoir for receiving the sample fluid and/or may comprise a slot for receiving a reservoir containing the sample fluid, e.g. a test or sample tube. The microfluidics unit may further comprise one or more fluid connectors for interfacing ports of the microfluidic system and/or ports of the mount. The microfluidics unit may further comprise one or more pressure sources such as pumps and/or one or more valves for generating the sample fluid flow and/or additional flows such as one or more sheath fluid flows.

The controller may be implemented in hardware, software or a combination thereof. The controller may for example comprise a processing device and a memory storing instructions for execution by the processing device to provide the functionality described herein. The controller may for example be configured to read-out one or more phase shift images from the microscope and to identify cell aggregates therein, e.g. as described above for the method according to the first aspect of the present disclosure. The controller may further be configured to control some or all of the other components of the device, in particular the microfluidics unit and/or a sample preparation unit as described below. Preferably, the controller is configured to execute some or all of the steps of the method for detecting cell aggregates of biological cells according to one of the embodiments and examples described herein.

In a preferred example, the microfluidic system further comprises a hydrodynamic focusing junction in fluid communication with the measurement volume. The hydrodynamic focusing junction may be configured to generate two or more sheath flows surrounding a sample fluid flow to hydrodynamically focus the sample fluid flow in the measurement volume. The microfluidics unit may be configured to provide a sheath fluid to the hydrodynamic focusing junction to hydrodynamically focus the sample fluid flow in the measurement volume such that cell aggregates in the sample fluid flow are focused in the focal plane of the microscope. At the hydrodynamic focusing junction, a sample channel, which may e.g. be configured to guide the sample fluid flow to the measurement volume, may intersect with two or more sheath flow channels, each of which may e.g. be configured to guide a respective one of the sheath flows to the measurement volume such that the corresponding sheath flow flows between the sample fluid flow and a respective wall of the measurement volume.

In a preferred example, the device further comprises a sample preparation unit configured to provide the viscoelastic fluid comprising the shear-thinning polymer with a molecular weight between 2 MDa and 10 MDa to prepare the sample fluid comprising biological cells from the sample and the viscoelastic fluid, wherein the mass fraction of the shear-thinning polymer in the sample fluid is less than 0.2%. The sample preparation unit may for example comprise a reservoir for receiving the sample or a part thereof, e.g. a whole blood sample or a blood fraction sample, or a slot for receiving a reservoir containing the sample. The sample preparation unit may further comprise a reservoir for receiving the viscoelastic fluid and may be configured to mix the viscoelastic fluid and the sample or a part thereof, e.g. by adding the viscoelastic fluid to the sample or vice versa. In some examples, the sample preparation unit and the microfluidics unit may be integrated into a single unit.

Preferably, the sample preparation unit is configured to adjust a mass fraction of the shear-thinning polymer in the sample fluid, for example at least within a range between 0.03% and 0.12%, in some examples at least within a range between 0% and 0.2%. The sample fluid may for example be configured to adjust an amount of viscoelastic fluid added to the sample fluid, a concentration of the shear-thinning polymer in the viscoelastic fluid and/or an amount of another fluid, e.g. water or an aqueous solution, added to the sample fluid in addition to the viscoelastic fluid.

Additionally or alternatively, the sample preparation unit is configured to dilute the sample fluid by a factor between 1:10 and 1:1000, preferably between 1:50 and 1:200. Diluting the sample fluid by a given factor may e.g. refer to adding the viscoelastic fluid and/or other fluids to the sample or a part thereof in such amounts that the sample or a part thereof makes up the respective fraction of the sample fluid by mass or volume. In a preferred example, the sample preparation unit is further configured to adjust the dilution factor, e.g. within the aforementioned ranges.

In some examples, the sample preparation unit is further configured to add one or more platelet-activating substances and/or one or more leukocyte-activating substances to the sample fluid and/or to the sheath fluid. The sample preparation unit may for example comprise a respective reservoir for each of the one or more platelet-activating substances and/or for each of the one or more leukocyte-activating substances and may be configured to add a predefined amount of one or more of these substances to the sample fluid and/or to the sheath fluid.

Preferably, the microfluidics unit is configured to control a flow velocity of the sample fluid flow in the measurement volume, wherein the flow velocity of the sample fluid flow may for example be between 1 mm/s and 1.0 m/s, preferably between 1 mm/s and 250 mm/s, in some examples between 5 mm/s and 100 mm/s, in one example between 8 mm/s and 64 mm/s. The microfluidics unit may for example be configured to adjust a flow rate of the sample fluid provided to the hydrodynamic focusing junction. The microfluidics unit may further be configured to adjust a flow rate of the sheath fluid provided to the hydrodynamic focusing junction, preferably such that a flow velocity or a flow rate of each of the two or more sheath flows can be controlled individually, e.g. to move or adjust a focusing region to which the sample fluid flow is confined by the sheath flows.

In a preferred example, the controller is configured to execute some or all of the steps for analyzing a phase shift image described above for the method according to the first aspect of the present disclosure. In particular, the controller may be configured to determine a number of cells in a cell aggregate identified in the phase shift image and/or a cell type of some or all of the cells in the cell aggregate identified in the phase shift image, e.g. as described above. The controller may be configured to identify platelet aggregates and/or leukocyte-platelet aggregates in the phase shift image. Preferably, the controller is further configured to determine a number of leukocyte-platelet aggregates comprising two or more leukocytes and/or a number of cell aggregates comprising three or more cells in the phase shift image, e.g. as described above.

### LIST OF FIGURES

In the following, a detailed description of the invention and exemplary embodiments thereof is given with reference to the figures. The figures show schematic illustrations of
Fig. 1: a device for detecting cell aggregates of biological cells according to an example useful for understanding the invention;
Fig. 2: a microscope of the device of Fig. 1 in accordance with an example useful for understanding the invention;
Fig. 3: a flow chart of a method for detecting cell aggregates of biological cells using a quantitative phase-contrast microscope according to an example useful for understanding the invention;
Fig. 4: examples of phase shift images of single cells and cell aggregates obtained using a method according to an example useful for understanding the invention;
Figs. 5a, 5b: an image segmentation for identifying constituents of cell aggregates in accordance with an example useful for understanding the invention;
Fig. 6: an identification of platelet aggregates of different sizes in accordance with an example useful for understanding the invention;
Figs. 7a, 7b: an analysis of the formation of aggregates induced by shear-thinning polymers in various concentrations;
Fig. 8: a flow chart of a method for detecting platelet aggregates using a quantitative phase-contrast microscope according to an exemplary embodiment of the invention;
Fig. 9: experimental data on the viral load of Covid-19 patients as a function of the fraction of platelet aggregates in blood samples of the patients;
Fig. 10a, 10b: experimental data on the fraction of platelet aggregates in blood samples of patients having a Covid-19 infection with different degrees of severity in comparison with healthy individuals;
Fig. 11a, 11b: experimentally determined cell number distributions of platelet aggregates in blood samples of Covid-19 patients in comparison with healthy individuals;
Fig. 12: experimentally determined ratio of the median phase shift of all pixel values in a segmented cell (OpticalHeightMean) divided by the diameter of the respective cell for patients having a Covid-19 infection with different degrees of severity in comparison with healthy individuals;
Fig. 13: experimentally determined platelet size distributions of single platelets and aggregated platelets in blood samples of Covid-19 patients in comparison with healthy individuals; and
Fig. 14: the evolution of the fractions of platelets and aggregated platelets over time in samples from a Covid-19 patient determined using a method according to the invention in comparison with the platelet count determined using a conventional flow cytometry method, which cannot resolve platelet aggregates.

### DESCRIPTION OF THE PREFERRED EXAMPLES AND EMBODIMENTS

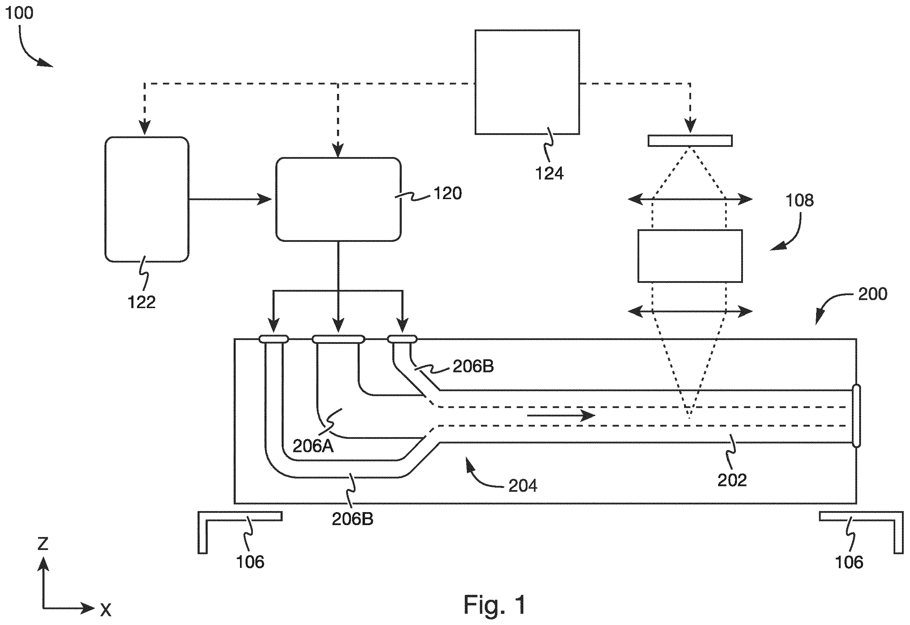

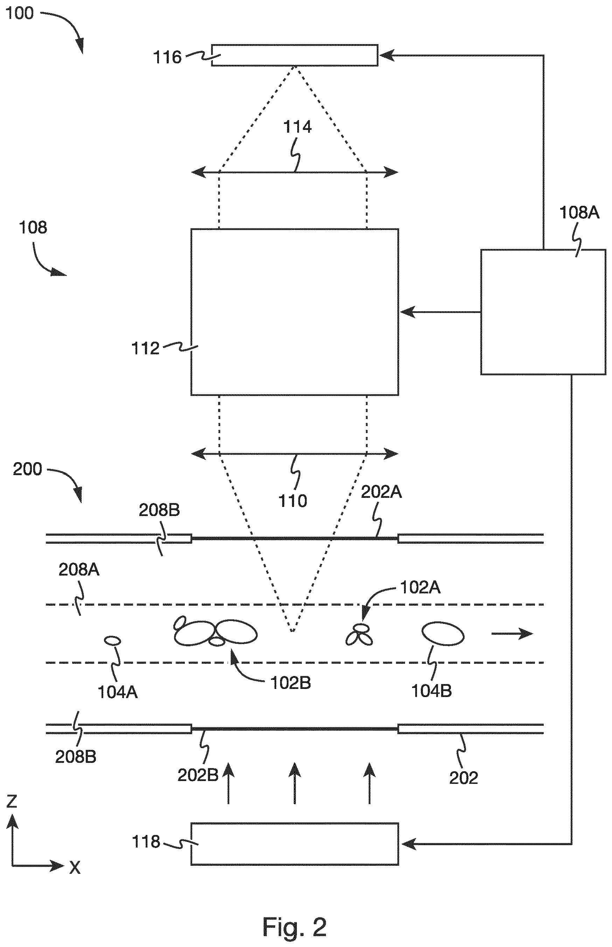

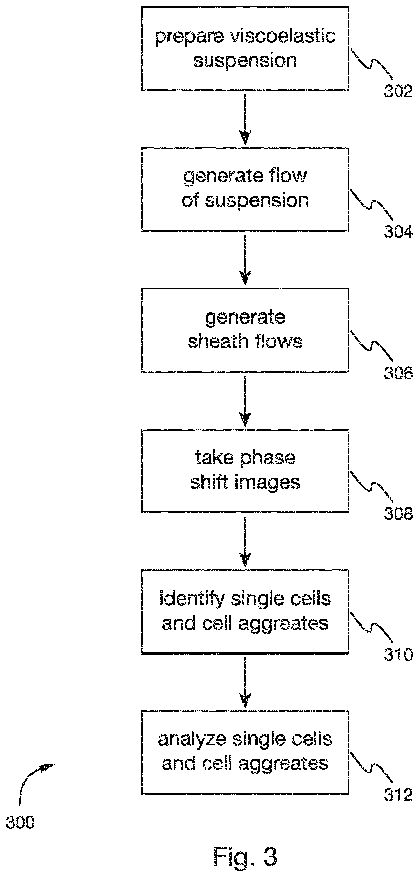

Fig. 1 shows a schematic illustration (not to scale) of a device 100 for detecting cell aggregates 102A, 102B (not shown) of biological cells 104A, 104B (not shown) according to an example useful for understanding the invention. A schematic illustration (not to scale) of a microscope 108 of the device 100 is depicted in Fig. 2. The device 100 may be employed for performing a method for detecting cell aggregates according to any one of the embodiments and examples described herein, for example the method 300 described below with reference to Fig. 3.

The device 100 comprises a mount 106 that is configured to receive a microfluidic system 200, wherein the microfluidic system 200 comprises a measurement volume 202 and a hydrodynamic focusing junction 204. The measurement volume 202 and the hydrodynamic focusing junction 204 may for example be arranged in a substrate comprising one or more layers, each of which may e.g. comprise or consist of glass, plastic (in particular a transparent thermoplastic such as polymethyl methacrylate, PMMA), metal or a combination thereof.

The measurement volume 202 may for example be a microfluidic channel or a portion thereof and may for example have a width between 50 µm and 1000 µm in a direction of view of Figs. 1 and 2, a height between 30 µm and 500 µm in the Z direction of Figs. 1 and 2 and a length between 50 µm and 60 mm in the X direction of Figs. 1 and 2. In one example, the measurement volume 202 has a rectangular cross-section with a width between 300 µm and 700 µm, e.g. 500 µm, and a height between 30 µm and 100 µm, e.g. 50 µm. A distance between a center of the measurement volume 202, which may e.g. be aligned with a focal point of the microscope 108, and the hydrodynamic focusing junction 204 may for example be between 30 mm and 60 mm, in some examples between 35 mm and 50 mm, e.g. 40 mm. The measurement volume 202 comprises a detection window 202A, which may for example be a transparent sidewall of the measurement volume 202 or a part thereof or may be a transparent window arranged in a sidewall of the measurement volume 202. The detection window 202A is optimized for phase shift measurements. For example, a transmitted wavefront error of the detection window 202A may be less than λ/2, preferably less than λ/4, in one example less than λ/8. The detection window 202A may for example comprise or consist of a transparent thermoplastic, borosilicate glass and/or fused silica. The microfluidic system 200 further comprises an illumination window 202B for illuminating the measurement volume 202, wherein the illumination window 202B may e.g. be arranged on an opposite side of the measurement volume 202 as the detection window 202A as illustrated in Fig. 2 and preferably is also optimized for phase shift measurements.

At the hydrodynamic focusing junction 204, a sample channel 206A intersects with a plurality of sheath flow channels 206B such that a sample fluid flow 208A entering the measurement volume 202 from the sample channel 206A can be surrounded by two or more sheath flows 208B that flow between the sample fluid flow 208A and a respective wall of the measurement volume 202. In the example of Fig. 1, the microfluidic system 200 comprises two vertical sheath flow channels 206B that are configured to generate a pair of vertical sheath flows 208B sandwiching the sample fluid flow 208A in the Z direction of Figs. 1 and 2 in order to hydrodynamically focus the sample fluid flow 208A along the Z direction. The Z direction may for example be aligned with an optical axis of the microscope 108, i.e. may correspond to a direction perpendicular to a focal plane of the microscope 108. In addition, the microfluidic system 200 may also comprise two horizontal or lateral sheath flow channels (not shown) that are configured to generate a pair of horizontal or lateral sheath flows sandwiching the sample fluid flow 208A the direction of view of Figs. 1 and 2 in order to hydrodynamically focus the sample fluid flow 208A along the direction of view of Figs. 1 and 2.

In some examples, the microfluidic system 200 may not comprise the hydrodynamic focusing junction 204, e.g. in cases in which cell aggregates 102A, 102B and single cells 104A, 104B in the sample fluid flow 208A are only focused by viscoelastic focusing. In such examples, there may be no sheath flows in the measurement volume 204 and the sample fluid flow 208A may extend over the entire height of the measurement volume 202, e.g. from a bottom wall comprising the illumination window 202B to a top wall comprising the detection window 202A. To provide sufficient confinement of the cell aggregates 102A, 102B and single cells 104A, 104B in the sample fluid flow 208A, a measurement volume 202 having a smaller height may e.g. be used in these cases. The height of the measurement volume 202 may for example be between 30 µm and 70 µm, in some examples between 40 µm and 60 µm, e.g. 50 µm.

The mount 106 is configured to hold the microfluidic system 200 at a fixed reference position relative to the microscope 108. The mount 106 may also be configured to position the microfluidic system 200 relative to the microscope 108, e.g. to move the microfluidic system 200 along one or more directions and/or to tilt the microfluidic system 200 around one or more axes, e.g. to align a central plane or a centerline of the measurement volume 202 with the focal plane of the microscope 108.

The microscope 108 of the device 100 is a quantitative phase-contrast microscope, in particular a digital holographic microscope that is configured to take phase shift images and intensity images of the sample fluid flow 208A in the measurement volume 202 through the detection window 202A. For this, the microscope 108 comprises an imaging system with an objective 110, a holographic imaging system 112 and an imaging lens 114, wherein the imaging system is configured to image the focal plane of the microscope 108 onto a camera 116, which may for example be a CCD or CMOS camera. The microscope 108 also comprises an illumination source 118 that is configured to illuminate the measurement volume 202 through the illumination window 202B. The microscope 108 further comprises a microscope controller 108A for controlling the holographic imaging system 112, the camera 116 and/or the illumination source 118.

The objective 110 may for example be a high-NA objective having a numerical aperture larger than 0.4, in some examples larger than 0.5. A depth of field of the objective 110 may be smaller than 10 µm, preferably smaller than 5 µm, in one example between 2 µm and 3 µm, wherein the depth of field may e.g. be defined as a minimum Rayleigh length of a laser beam focused by the objective 110, for example at a wavelength of 1064 nm. This may allow for precise focusing on objects such as the cell aggregates 102A, 102B in the measurement volume 202 and may provide sufficient spatial resolution to resolve morphological features of individual cells.

The holographic imaging system 112 is configured to create an interference image on the camera 116, e.g. by interfering an imaging beam with a reference beam on the camera 116. The imaging beam may for example be a beam that passes through the measurement volume 202 and propagates from the focal plane of the microscope 108 to the camera 116 along a first optical path through the holographic imaging system 112. The reference beam may for example be a beam propagating to the camera 116 along a second optical path through the holographic imaging system 112. In some examples, the reference beam may be split from the imaging beam, e.g. using a beam splitter or a diffraction grating, i.e. the reference beam may also have passed through the measurement volume 202 and may propagate to the camera 116 from the focal plane of the microscope 108 along the second optical path. In other examples, the reference beam may not have passed through the measurement volume 202 and may e.g. be split from the imaging beam in front of the measurement volume 202.

The digital holographic microscope 108 may be an on-axis digital holographic microscope, in which the imaging beam and the reference beam propagate along the same axis when interfering, i.e. interfere at an angle of 0°. The microscope controller 108A may for example be configured to extract or reconstruct a phase shift image as well as an intensity image of the sample fluid flow 208A in the measurement volume 202 from a plurality of interference images, e.g. by varying a phase offset between the reference and imaging beams using the holographic imaging system 112. Preferably, the microscope 108 is an off-axis digital holographic microscope, in which the imaging beam and the reference beam interfere under an angle. In this case, the microscope controller 108A may be configured to extract or reconstruct the phase shift image as well as the intensity image of the sample fluid flow 208A from a single interference image. Alternatively, the microscope 108 may be a ptychographic imaging device and analysis of ptychographic images may be performed to classify cell aggregates.

The illumination source 118 is configured to illuminate the measurement volume 202 by spatially and/or temporally coherent light, wherein a coherence length of the illumination light may for example be larger than a field of view of the microscope 108 and a coherence time of the illumination light may for example be larger than a time delay between the image and reference beams, i.e. such that an interference pattern can be observed on the camera 116. The illumination source 108 may for example comprise a laser or a light-emitting diode and may be configured to emit monochromatic light, e.g. at a wavelength between 500 nm and 1100 nm.

The microscope controller 108A may be implemented in hardware, software or a combination thereof. The microscope controller 108A may be configured to provide the phase shift and intensity images to another device, in particular to the controller 124 of the device 100, and may be controlled by another device such as the controller 124. In some examples, the microscope controller 108A or a part thereof may be integrated into the controller 124. In addition to reconstructing the phase shift and intensity images, the microscope controller 108A may also be configured to analyze the phase shift and/or intensity images, e.g. as detailed below for method 300.

The device 100 further comprises a microfluidics unit 120 and a sample preparation unit 122, which in some examples may be integrated into a single unit. The sample preparation unit 122 is configured to receive a liquid sample comprising biological cells, e.g. in a test tube. The liquid sample may in particular be a whole blood sample, which comprises single cells such as platelets 104A, white blood cells (leukocytes) 104B as well as red blood cells (not shown). The whole blood sample may further comprise aggregates of blood cells such as platelet aggregates 102A consisting of a plurality of platelets, leukocyte-platelet aggregates 102B consisting of one or more platelets and one or more leukocytes and/or leukocyte aggregates (not shown) consisting of a plurality of leukocytes. In other examples, the liquid sample may also be a blood fraction sample, e.g. a sample comprising one or more components of a whole blood sample. The sample preparation unit 122 is configured to prepare a sample fluid comprising biological cells from the sample by adding a viscoelastic fluid to the sample, e.g. as described below for method 300.

The microfluidics unit 120 is configured to receive the sample fluid from the sample preparation unit 122 and is configured to generate the sample fluid flow 208A through the measurement volume 202 by providing the sample fluid to an inlet of the sample channel 206A. The microfluidics unit 120 is further configured to generate the sheath fluid flows 208B for hydrodynamically focusing the sample fluid flow 208A by providing a sheath fluid to inlets of the sheath flow channels 206B. The microfluidics unit 120 may for example comprise a respective reservoir for the sample fluid and the sheath fluid as well as one or more pumps for providing the sample fluid and the sheath fluid to the respective inlets of the microfluidic system 200.

The device 100 comprises a controller 124 that is configured to control the microscope controller 108A, the microfluidics unit 120 and/or the sample preparation unit 122. The controller 124 is further configured to analyze phase shift images obtained from the microscope 108 and in particular to identify cell aggregates such as the cell aggregates 102A, 102B therein, e.g. as described below for method 300. Preferably, the controller 124 is configured to execute the method 300 at least in part. The controller 124 may be implemented in hardware, software or a combination thereof. The controller 124 may for example comprise a processing device (not shown) and a memory (not shown) storing instructions for execution by the processing device to provide the functionality described herein. The controller 124 may for example comprise a central processing unit (CPU), a graphics processing unit (GPU), a field programmable gate array (FPGA), an application-specific integrated circuit (ASIC) and/or a microcontroller.

Fig. 3 shows a flow chart of a method 300 for detecting cell aggregates of biological cells using a quantitative phase-contrast microscope according to an example useful for understanding the invention. The method 300 may e.g. be used to detect the presence of cell aggregates in a sample such as a whole blood sample, which is used as a non-limiting example for illustrative purposes in the following. In other examples, the sample may e.g. be a blood fraction sample. The method 300 may for example be implemented with the device 100 and the microfluidic system 200 of Figs. 1 and 2, which are used as examples for illustration purposes in the following. This is, however, not intended to be limiting in any way and the method 300 may also be implemented using a different device with a quantitative phase-contrast microscope and/or using a different microfluidic system. Furthermore, the method 300 is not limited to the order of execution shown in the flowchart of Fig. 3. As far as technically feasible, the method 300 may be executed in an arbitrary order and parts thereof may be executed simultaneously at least in part, for example steps 304 to 308.

In step 302, a suspension is prepared which comprises a viscoelastic fluid and biological cells from the sample such as the single cells 104A, 104B and the cell aggregates 102A, 102B. The suspension, which may also be referred to as the sample fluid in the following, may for example be prepared using the sample preparation unit 122 of the device 100, e.g. by adding the viscoelastic fluid to the whole blood sample or vice versa in a reservoir of the sample preparation unit 122. The viscoelastic fluid comprises a linear water soluble shear-thinning polymer such as poly(ethylene oxide) (PEO) or poly(vinyl pyrrolidone) (PVP), wherein the molecular weight of the shear-thinning polymer is between 2 MDa and 10 MDa, preferably between 3.5 MDa and 4.5 MDa, e.g. 4.0 MDa. The sample fluid is prepared such that a mass fraction of the shear-thinning polymer in the sample fluid is less than 0.2%, preferably between 0.04% and 0.06%, for example 0.05%. In the sample fluid, the whole blood sample may be diluted by a factor between 1:50 and 1:200, for example by a factor of 1:100, e.g. by adding an appropriate amount of the viscoelastic fluid and/or of another fluid such as water or an aqueous solution.

Preparing the suspension in step 302 preferably does not comprise any of a lysis of erythrocytes, a sphering of platelets and erythrocytes and a labelling or staining of cells. In some examples, a coagulation-inhibiting substance such as ethylenediamine tetra-acetic acid (EDTA) may be added to the whole blood sample to prevent coagulation, e.g. prior to or when preparing the sample fluid. In some examples, a platelet-activating substance such as thrombin receptor activating peptide (TRAP) may be added to the whole blood sample or to the sample fluid.

In step 304, a flow 208A of the sample fluid containing the single cells 104A, 104B and the cell aggregates 102A, 102B is generated through the measurement volume 202 of the microfluidic system 200, e.g. using the microfluidics unit 120. As a result of the shear thinning induced by the shear-thinning polymer, the viscoelastic fluid may exert hydrodynamic forces on the single cells 104A, 104B and the cell aggregates 102A, 102B in the sample fluid flow 208A. This may induce a motion perpendicular to a direction of flow such that the single cells 104A, 104B and the cell aggregates 102A, 102B are focused viscoelastically in a center region of the sample fluid flow 208A, which may be aligned with a focal plane of the microscope 108.

Simultaneously, two or more sheath flows 208B may be generated through the measurement volume 202 in step 306 to hydrodynamically focus the sample fluid flow 208A in addition to the viscoelastic focusing, e.g. by providing a sheath fluid to inlets of the sheath flow channels 206B of the microfluidic system 200. A pair of vertical sheath flows 208B may sandwich the sample fluid flow 208A in the Z direction of Figs. 1 and 2 and a pair of horizontal sheath flows may sandwich the sample fluid flow 208A in the direction of view of Figs. 1 and 2, thereby confining the sample fluid flow 208A in two orthogonal directions. By adjusting the flow rates of the sheath flows 208B, a position of the sample fluid flow 208A in the measurement volume 202 may be controlled, e.g. such that the sample fluid flow 208A flows along a centerline of the measurement volume 202 and the single cells 104A, 104B and cell aggregates 102A, 102B contained therein are focused in the focal plane of the microscope 108. In some examples, the shear-thinning polymer contained in the viscoelastic fluid may also be added to the sheath fluid for the sheath fluid flows, e.g. such that the sheath fluid also becomes a shear-thinning fluid. In some examples, the method 300 may not comprise generating the sheath flows 208B in step 306, but the single cells 104A, 104B and cell aggregates 102A, 102B in the sample fluid flow 208A may e.g. be focused in the focal plane of the microscope 108 by viscoelastic focusing only. For example, no sheath fluid may be provided to the sheath flow channels 206B or a microfluidic system 200 without the sheath flow channels 206B and the hydrodynamic focusing junction 204 may be used. A height of the measurement volume 202 along the Z direction of Fig. 2 may be chosen accordingly and may for example be between 30 µm and 70 µm, in some examples between 40 µm and 60 µm, e.g. 50 µm.

In order to avoid damaging the cell aggregates 102A, 102B, the flow velocities of the sample fluid flow 208A and of the sheath flows 208B are chosen such that a shear stress that the cell aggregates 102A, 102B are exposed to in the sample fluid flow 208A is less than 50 Pa, preferably less than 10 Pa, e.g. by adjusting the flow rates through the sample channel 206A and the sheath flow channels 206B accordingly. The flow rates may for example be chosen such that the flow velocity of the sample fluid flow 208A in the measurement volume 202 is between 5 mm/s and 100 mm/s, in one example between 8 mm/s and 64 mm/s.

While the sample fluid flow 208A flows through the measurement volume 202, one or more phase shift images of the single cells 104A, 104B and the cell aggregates 102A, 102B in the sample fluid flow 208A are taken with the microscope 108. The dilution factor of the sample in the sample fluid may for example be chosen such that each phase shift image contains between 5 and 50 single cells or cell aggregates in order to facilitate distinguishing the single cells and cell aggregates from each other. Preferably, a sequence of phase shift images is taken, for example with a frame rate between 10 frames per second and 200 frames per second. This may allow for analyzing a large number of single cells and cell aggregates in a short amount of time and thus facilitates the detection of types of cell aggregates that rarely occur in the sample.

In steps 310 and 312, the phase shift images taken in step 308 are analyzed, e.g. using the microscope controller 108A and/or the controller 124 of the device 108. This comprises identifying cell aggregates 102A, 102B as well as single cells 104A, 104B in the respective phase images in step 310. Cell aggregates and single cells may for example be distinguished based on a combination of morphological parameters such as a mean diameter and a maximum phase shift, for example by defining corresponding regions in the parameter space spanned by the morphological parameters, e.g. using one or more thresholds for the respective parameters. Additionally or alternatively, cell aggregates may also be identified using computer vision techniques such as a neural network-based classifier. Step 310 may also comprise determining a total number of single cells, a total number of cell aggregates and/or a fraction of cell aggregates, i.e. the ratio of the total number of cell aggregates to the total number of single cells and cell aggregates.

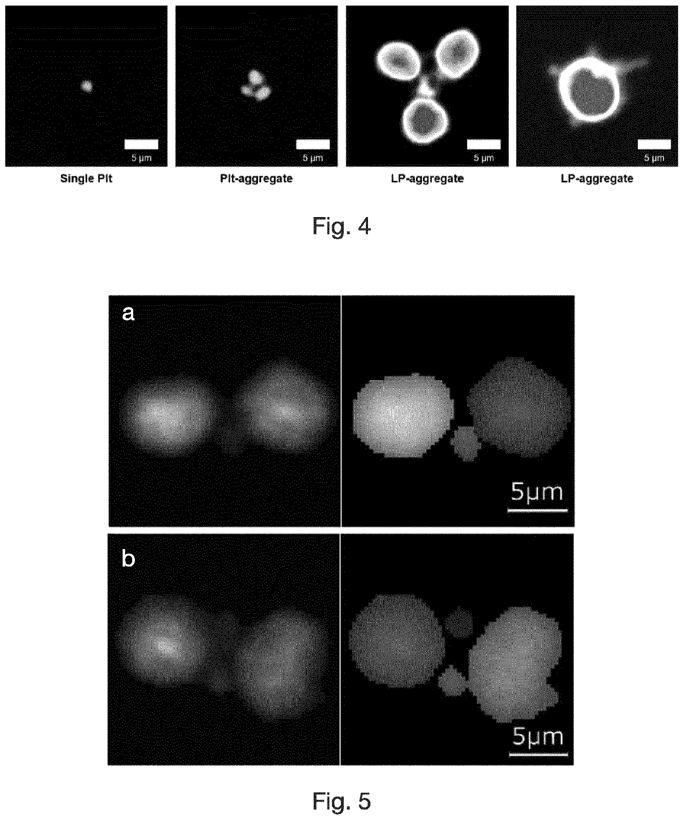

In step 312, the single cells 104A, 104B and the cell aggregates 102A, 102B identified in step 310 may be analyzed further. This may in particular comprise determining a number of cells in the cell aggregates 102A, 102B as well as determining a cell type of the single cells 104A, 104B and a cell type of the cells in the cell aggregates 102A, 102B. To determine the number of cells in a cell aggregate 102A, 102B, constituents of the cell aggregate 102A, 102B may be identified by performing an image segmentation on a portion of the phase shift image associated with the cell aggregate 102A, 102B, e.g. using a watershed algorithm as detailed below with reference to Fig. 5. Subsequently, one or more morphological parameters may be determined for the constituents of the cell aggregates 102A, 102B as well as for the single cells 104A, 104B in order to determine the cell type of the constituents of the cell aggregates 102A, 102B and of the single cells 104A, 104B. The cell type may for example be determined by defining corresponding regions in the parameter space spanned by the morphological parameters. In other examples, the cell type may e.g. be determined using a regression analysis, a linear discriminant analysis, a decision tree classification, a random forest classification and/or a neural network-based classifier.

Step 312 may in particular be used to identify platelet aggregates, leukocyte-platelet aggregates and/or leukocyte aggregates in the phase shift images, e.g. to determine a total number or fraction of the respective aggregates in the phase shift images. Step 312 may also comprise determining a number or fraction of leukocyte-platelet aggregates comprising two or more leukocytes and/or a number or fraction of leukocyte-platelet aggregates and/or platelet aggregates comprising three or more cells, e.g. as an indicator for a bacterial infection.

Fig. 4 depicts four examples of phase shift images of single cells and cell aggregates obtained using a method according to an example useful for understanding the invention such as the method 300. The images were obtained from a diluted and stabilized whole blood sample of a patient in surgical intensive care. As a preanalytical step, the blood sample was diluted with the factor 1:100 in a viscoelastic polymer solution. The polymer solution was composed of 99.95% phosphate buffered saline (PBS) and 0.05% of PEO (4 MDa). During the measurement, a total flow rate of 1.6 µl/s and a sample flow rate of 0.2 µl/s was used. The image on the left contains a single platelet, the center-left image contains a platelet aggregate consisting of three platelets, the center-right image contains a leukocyte-platelet aggregate consisting of three leukocytes and a plurality of platelets and the image on the right contains a leukocyte-platelet aggregate consisting of a single leukocyte and a plurality of platelets.

Fig. 5a, 5b illustrate examples for an image segmentation to identify constituents of cell aggregates in accordance with an example useful for understanding the invention, wherein Fig. 5a shows an example for a leukocyte-platelet aggregate consisting of two leukocytes and a single platelet and Fig. 5b shows an example for a leukocyte-platelet aggregate consisting of two leukocytes and two platelets. The plots on the left show the respective phase shift images and the plots on the right depict the outcome after segmentation of the phase shift images. The segmentation was performed via watershed segmentation using an inverse distance transform. The inversed version of the standard transform results in high intensity at the cell boundaries and low intensity in the middle of the cells. In this case, the local minima in the inverse distance map ideally correspond to the centroids of the cells and is robust to high gradients in the cell's interior.

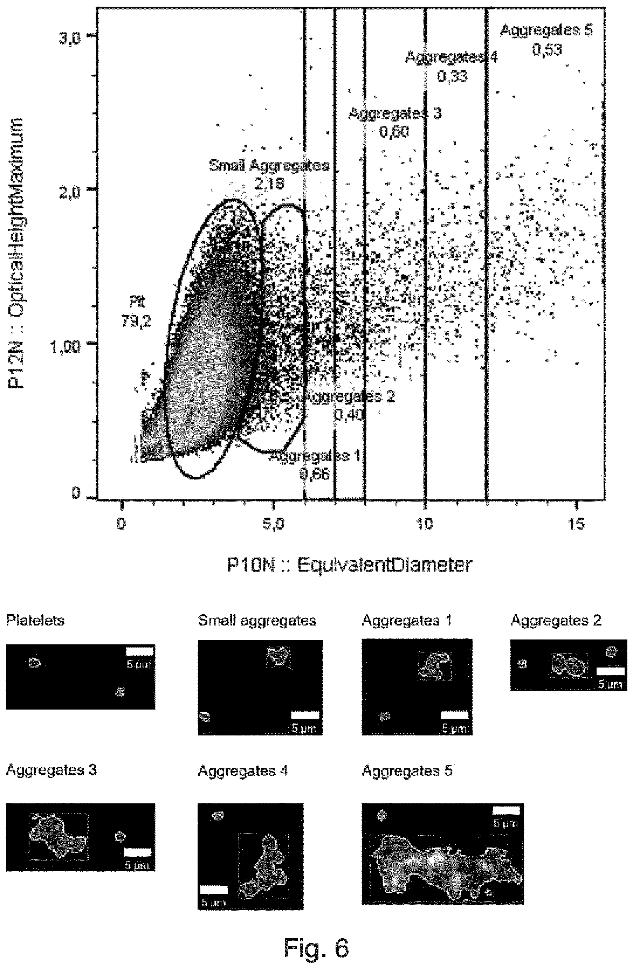

Fig. 6 illustrates the identification of single cells and platelet aggregates of different sizes in accordance with an example useful for understanding the invention. For this, two morphological parameters of the single cells and cell aggregates were extracted from the phase shift images, namely the mean diameter (equivalent diameter) and the maximum phase shift (optical height maximum) plotted on the X and Y axis, respectively, of the upper plot. In this parameter space, a plurality of regions were defined as illustrated by the solid black lines in the upper plot, each of which corresponds to aggregates of a certain size, namely single platelets (left-most region), "small aggregates" (second region from the left), "aggregates 1" (third region from the left), "aggregates 2" (fourth region from the left), "aggregates 3" (third region from the right), "aggregates 4" (second region from the right) and "aggregates 5" (right-most region). Fig. 6 provides an example of a simple and easy to implement method of analyzing phase contrast images of single cells and cell aggregates. This analysis only relies on two morphological parameters, which moreover can be obtained easily from the phase contrast images and are robust with regard to variations in image quality. Even though the information conveyed by these two morphological parameters is not sufficient to allow for determining the number of platelets in the aggregates, it nonetheless provides a fast and efficient way of classifying platelet aggregates by size, e.g. to determine a histogram of the aggregate size distribution. Additional information such as the number of platelets per aggregate may for example be obtained by determining additional morphological parameters and/or using a neural-network based classifier, e.g. the Mask R-CNN, cf. K. He, G. Gkioxari, P. Dollár, and R. Girshick, "Mask RCNN", In: Proceedings of the IEEE international conference on computer vision, 2017, pp. 2961-2969*.*

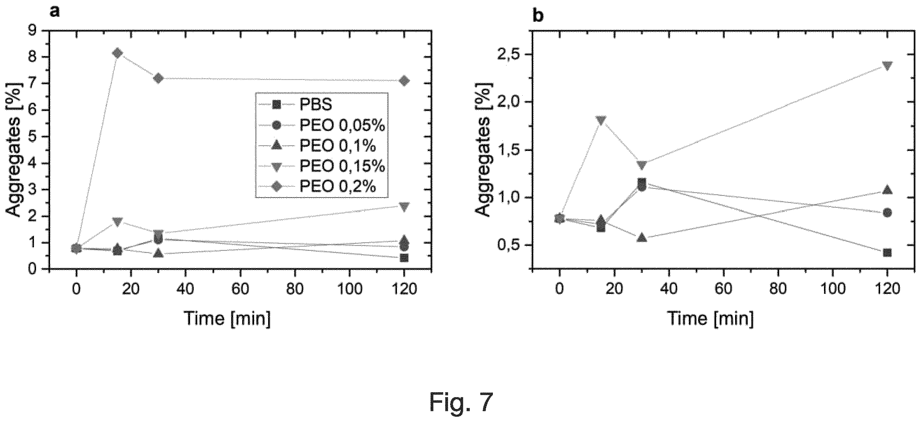

Figs. 7a, 7b show the results of experiments studying the effect of shear-thinning polymers on the formation of platelet aggregates, wherein Fig. 7b is an enlarged version of the lower portion of Fig. 7a. For this, a suspension comprising a thrombocyte concentrate and a viscoelastic fluid containing poly(ethylene oxide) (PEO) with a molecular weight of 4 MDa and phosphate buffered saline (PBS) was prepared and the fraction of platelet aggregates was determined as a function of time for various concentrations of PEO in the suspension. As a reference, the same experiment was conducted with a suspension comprising a whole blood sample and phosphate buffered saline (PBS) only, i.e. without adding PEO. At PEO mass fractions of 0.05% and 0.1%, no significant formation of additional platelet aggregates over the PBS reference was observed. At a PEO mass fraction of 0.15%, a slight increase in the fraction of platelet aggregates was observed, while a PEO mass fraction of 0.2% already leads to a substantial increase in the fraction of platelet aggregates. This highlights the importance of choosing an appropriate mass fraction of the shear-thinning polymer in the suspension in order to avoid affecting the result of the measurements by polymer-induced formation of cell aggregates.

It is an object of the present invention to provide means for determining reliable clinical indicators for inflammation, thrombosis, and infections, in particular bacterial and viral infections.

This object is met by a method for detecting cell aggregates of biological cells using a quantitative phase-contrast microscope according to claim 1 and a device for detecting cell aggregates of biological cells according to claim 11. Embodiments thereof are detailed in the dependent claims.

The present invention provides a method for detecting cell aggregates of biological cells using a quantitative phase-contrast microscope, wherein the method comprises (1) preparing a suspension comprising biological cells from a sample; (2) generating a flow of the suspension along a microfluidic channel to viscoelastically and/or hydrodynamically focus cell aggregates in the suspension in a focal plane of the quantitative phase-contrast microscope; (3) taking one or more phase shift images of the biological cells in the suspension using the quantitative phase-contrast microscope; and (4) identifying cell aggregates in the one or more phase shift images. The sample is a whole blood sample or a blood fraction sample and identifying cell aggregates in the one or more phase shift images comprises identifying platelet aggregates in the one or more phase shift images. The above numbering is for clarity only and does not imply a certain order of execution of the method. As far as technically feasible, the method may be executed in an arbitrary order and parts thereof may be executed simultaneously at least in part. The method according to the present invention may also be referred to as the method according to the second aspect of the present disclosure.

Preparing the suspension may for example comprise providing the sample, which may e.g. have been drawn from a patient prior to execution of the method, and diluting the sample by a pre-defined factor with another fluid, e.g. as detailed above for the method and device according to the first aspect of the present disclosure. In a preferred embodiment, the suspension further comprises a viscoelastic fluid as detailed below.

Cell aggregates, in particular platelet aggregates, in the suspension may be focused by one or both of viscoelastic focusing and hydrodynamic focusing, wherein the focusing may for example be achieved as detailed above for the method and device according to the first aspect of the present disclosure. In some embodiments, hydrodynamic focusing on its own, e.g. by generating one or more sheath flows, may provide sufficiently tight focusing of the cell aggregates, in particular of platelet aggregates, for obtaining the one or more phase shift images to identify the platelet aggregates therein and no viscoelastic focusing may be required.

Taking the one or more phase shift images and identifying the cell aggregates therein may be performed as detailed above for the method and device according to the first aspect of the present disclosure. Platelets and platelet aggregates may for example be distinguished from other cells and/or cell aggregates based on one or more morphological parameters pertaining to their size, shape and/or structure, for example a mean diameter (equivalent diameter) and/or a phase shift (optical height).

The method according to the present invention may further include any combination of the features described above for the method according to the first aspect of the present disclosure, e.g. the method 300 of Fig. 3, or vice-versa. The method according to the present invention may in particular comprise some or all of the additional method steps described above for the method according to the first aspect of the present disclosure, e.g. the method 300 of Fig. 3, or vice-versa. The method according to the invention may for example be executed with a device for detecting cell aggregates of biological cells according to any one of the embodiments and examples described herein, e.g. the device 100 of Figs. 1 and 2.

The present inventors have found that quantitative phase-contrast microscopy constitutes a reliable, versatile and precise tool for quantitatively analyzing platelet aggregates in blood samples. The inventors have also found that platelet aggregates, in particular their number, fraction and/or size, are a useful biomarker for inflammation and thrombosis as well as for a variety of infections, including viral infections such as Covid-19. Viscoelastic and/or hydrodynamic focusing of a suspension comprising cells from a blood sample allows for focusing of cell aggregates of different sizes and in some embodiments also of single cells in the focal plane of the microscope, which greatly facilitates identifying the platelet aggregates as well as extracting morphological parameters from the phase shift images.

In a preferred embodiment, the method according to the invention comprises determining a total number or fraction of platelet aggregates in the one or more phase shift images, e.g. as detailed above. The fraction of platelet aggregates may for example be the ratio of the number of platelet aggregates to the total number of single platelets and platelet aggregates. In another embodiment, the fraction of platelet aggregates may be the ratio of the number of platelets in platelet aggregates (i.e. all platelets that are contained in a platelet aggregate) to the total number of single platelets and platelets in platelet aggregates.

More generally speaking, the fraction of platelet aggregates may be the ratio of a numerator characterizing a number of platelet aggregates and/or a number of platelets in platelet aggregates to a denominator characterizing a total number of platelets and/or of platelet-containing objects (i.e. single platelets and platelet-containing aggregates). The numerator may for example be selected from the group consisting of the number of platelet aggregates and the number of platelets in platelet aggregates. The denominator may for example be selected from the group consisting of the total number of single platelets and platelet aggregates, the total number of single platelets and platelets in platelet aggregates, the total number of all platelets (i.e. the total number of single platelets and platelets in any type of aggregate), the total number of platelet-containing objects (i.e. the total number of single platelets and aggregates of any type containing platelets such as platelet aggregates and leukocyte-platelet aggregates), the total number of cells (i.e. cells of any types) and the total number of objects (i.e. single cells and cell aggregates of any type). The method may comprise determining some or all of the aforementioned fractions.

Additionally or alternatively, the total number or fraction of platelet aggregates may also be determined by determining a quantity that is related to or proportional to the total number or fraction of platelet aggregates. For example, the total number or fraction of platelet aggregates may be determined by determining a total number and fraction, respectively, of aggregated platelets that are contained in cell aggregates of any type (platelets in aggregates), e.g. as detailed below. In other words, the numerator for determining the fraction of platelet aggregates may also be the number of platelets in aggregates.

The total number or fraction of platelet aggregates may be a valuable indicator for inflammation, thrombosis, and infections, in particular for viral infections, and may for example correlate with a viral load and/or with a degree of severity of the infection. Accordingly, the method may further comprise using the total number or fraction of platelet aggregates as an indicator for complications of an infected patient, in particular of a Covid-19 patient, for example as an indicator for a viral load and/or for the degree of severity of an infection, in particular the degree of severity of a Covid-19 infection. The total number or fraction of platelet aggregates may for example be used as a prognostic indicator for determining a prognosis for the patient (e.g. an expected degree of severity), as a diagnostic indicator for determining whether the patient has an infection or a particular type of infection (e.g. to distinguish viral and bacterial infections and/or to distinguish different types of viral infections) and/or as a therapeutic indicator, e.g. to assess whether a therapy is working or not.

Activated platelets may for example be associated with increased serum troponin concentrations. Troponin is a marker of cardiac tissue injury as it for example occurs in Covid-19-associated myocarditis. The inventors have also observed that there is a significant within-subject correlation between the total number or fraction of platelet aggregates and the D-Dimer concentration. An increased or decreased number of platelet aggregates may correlate with a corresponding increase or decrease of the D-Dimer concentration. D-Dimer is a laboratory marker for fibrinolysis as it occurs in thromboembolic events and inflammatory conditions. The inventors have further observed that there is a significant within-subject correlation between platelet aggregates and serum procalcitonin (PCT) concentration. An increased or decreased number of platelet aggregates may correlate with a corresponding increase or decrease of PCT serum concentration. PCT is a laboratory marker of inflammation in infections.

Identifying the cell aggregates in the one or more phase shift images may also comprise determining a number of cells in the respective cell aggregate, e.g. as detailed above. This may be performed for some or all types of cell aggregates (e.g. leukocyte-platelet aggregates and/or leukocyte-leukocyte aggregates). In particular, identifying platelet aggregates in the one or more phase shift images may comprise determining a number of cells in the respective platelet aggregates, i.e. determining how many platelets an identified platelet aggregate contains or consists of. The method may further comprise determining a size distribution of a plurality of cell aggregates from the one or more phase shift images, for example a respective size distribution for one or more types of cell aggregates, in particular of platelet aggregates. The size distribution may for example be a cell number distribution, wherein determining the cell number distribution may for example comprise determining a number or fraction of cell aggregates as a function of the number of cells in the aggregate. In addition to or instead of the size distribution, one or more parameters pertaining to the size distribution may be determined, e.g. a mean of the cell number distribution, a median of the cell number distribution, a variation or standard deviation of the cell number distribution and/or a position of one or more peaks in the cell number distribution.

The method may further comprise determining a number or fraction of platelet aggregates comprising or consisting of at least a predefined number of cells, in particular determining a number or fraction of platelet aggregates comprising three or more cells. An increase in the number or fraction of larger platelet aggregates (for example comprising three or more cells) may be associated with an infection and/or a higher degree of severity of the infection.

In some embodiments, identifying cell aggregates in the one or more phase shift images may further comprise identifying cell aggregates of other types, in particular leukocyte-platelet aggregates and/or leukocyte-leukocyte aggregates, in the one or more phase shift images, e.g. as described above. Leukocytes, leukocyte-platelet, and leukocyte-leukocyte aggregates may for example be distinguished from other cells and/or cell aggregates based on one or more morphological parameters pertaining to their size, shape and/or structure, for example a mean diameter (equivalent diameter) and/or a phase shift (optical height). Leukocyte-platelet aggregates, in particular their number, fraction and/or size, may also be a useful biomarker for inflammation and/or for a variety of infections, including bacterial infections and viral infections such as Covid-19.

The method may further comprise determining a total number or fraction of leukocyte-platelet aggregates in the one or more phase shift images. The fraction of leukocytes-platelet aggregates may for example be defined similar as described above for the fraction of platelet aggregates, wherein one or both of platelets and leukocytes may serve as a reference for defining the fraction, e.g. for defining the numerator (for example the number of platelets in leukocyte-platelet aggregates) and/or the denominator (for example the total number of platelets and/or the total number of leukocytes).

Additionally or alternatively, the method may comprise determining a number or fraction of leukocyte-platelet aggregates comprising or consisting of at least a predefined number of cells, in particular determining a number of leukocyte-platelet aggregates comprising three or more cells (i.e. irrespective of the type of cells). The method may also comprise determining a size distribution of leukocyte-platelet aggregates and/or one or more parameters pertaining to said size distribution, e.g. as described above.

In some embodiments, the method may comprise determining a number or fraction of leukocyte-platelet aggregates comprising at least a predefined number of leukocytes. The method may in particular comprise determining a number or fraction of leukocyte-platelet aggregates comprising two or more leukocytes and/or determining a number or fraction of leukocyte-platelet aggregates comprising three or more leukocytes. Additionally or alternatively, the method may comprise determining a leukocyte cell number distribution of the leukocyte-platelet aggregates, e.g. by determining a number or fraction of leukocyte-platelet aggregates as a function of the number of leukocytes in the aggregate, and/or determining one or more parameters pertaining to the leukocyte cell number distribution, e.g. a mean, a median, and/or a variation of the number of leukocytes. The presence of larger leukocyte-platelet aggregates, in particular the presence of leukocyte-platelet aggregates comprising two or more leukocytes and/or the presence of leukocyte-platelet aggregates comprising three or more leukocytes, may be used as an indicator for an inflammation and/or for an infection, in particular as an indicator for a viral infection such as Covid-19 and/or for a bacterial infection.

The method may also comprise determining a type of leukocyte (e.g. neutrophil, eosinophil, basophil, lymphocyte or monocyte) for one or more leukocytes in the one or more phase shift images, in particular for some or all of the leukocytes in the identified cell aggregates, e.g. for some or all of the leukocytes in leukocyte-platelet aggregates and/or in leukocyte-leukocyte aggregates. In one embodiment, the method comprises determining the number and the type of leukocytes in leukocyte-platelet aggregates comprising at least a predefined number of cells and/or in leukocyte-platelet aggregates comprising at least a predefined number of leukocytes (e.g. two or more leukocytes).

In some embodiments, the method comprises determining, in the one or more phase shift images, a total number or fraction of aggregated platelets that are contained in cell aggregates of any type (e.g. platelets in platelet aggregates as well as platelets in other types of cell aggregates such as leukocyte-platelet aggregates). The number or fraction of aggregated platelets may correlate with the number or fraction of platelet aggregates and may also serve as an indicator for an inflammation and/or for an infection.

The method may also comprise determining a granularity measure from the one or more phase shift images, wherein the granularity measure characterizes (e.g. quantifies) a granularity of one or more cells in the one or more phase shift images. The granularity measure may for example be a quantity or parameter that correlates with the granularity of the respective cell. The one or more cells may comprise single cells and/or cells in cell aggregates (i.e. individual cells in one or more cell aggregates rather than the entire cell aggregates). The granularity of a cell may for example be indicative of an internal structure of the cell, in particular a degree of irregularity of the internal structure (for example the presence of young platelets in aggregates with larger volume and/or larger granularity). In conventional flow cytometry, side scatter of an incident laser beam may for example be used to probe the granularity of cells. In the method according to the invention, the granularity measure may for example correspond to or be determined based on a spatial variation of a phase shift (optical height) within a cell (e.g. a standard deviation and/or a peak-to-peak variation), spatial correlation of the phase shift (e.g. a correlation length), an aspect ratio of the cell, and/or a ratio of a phase shift (e.g. a mean or median optical height) to a size (e.g. a diameter or equivalent diameter in a phase shift image) of the cell. In one embodiment, the method comprises determining a first granularity measure for one or more (individual) cells in cell aggregates and a second granularity measure for one or more single cells.

The method may also comprise determining a size distribution of a plurality of cells and/or one or more parameters pertaining to said size distribution (e.g. a mean, a median, a variation and/or a position of a peak or maximum) from the one or more phase shift images. The plurality of cells may comprise single cells and/or cells in cell aggregates (i.e. individual cells in one or more cell aggregates rather than the entire cell aggregates). The size distribution may for example be the distribution of the sizes of individual cells (single cells and/or cells in aggregates), wherein the size may for example be a physical dimension of the respective cell such as a diameter or longitudinal extent, a cross-sectional area of the respective cell (e.g. an equivalent diameter), a mean, median or maximum phase shift of the respective cell or a combination thereof. In some embodiments, the method comprises determining a distribution of the diameter for a plurality of cells and a distribution of the mean or median phase shift for said plurality of cells. In one embodiment, the method comprises determining a first size distribution of a plurality of (individual) cells in cell aggregates (e.g. a distribution of the diameter and/or a distribution of the mean or median phase shift) and a second size distribution of a plurality of single cells (e.g. a distribution of the diameter and/or a distribution of the mean or median phase shift). The method may also comprise analyzing the composition of the aggregates with respect to size distributions and/or phase shifts of individual platelets in aggregates, e.g. to obtain size distributions for cells in different types of cell aggregates (e.g. for platelets in platelet-platelet aggregates and for platelets in leukocyte-platelet aggregates or for platelets in platelet-platelet aggregates comprising different numbers of platelets).

The granularity measure, the size distribution and/or the one or more parameters pertaining to said size distribution may for example be determined for single and/or aggregated cells of a particular type. In some embodiments, some or all of the aforementioned quantities may be determined individually for a plurality of cell types and/or for a plurality of cell aggregate types (i.e. separately for each of the types), e.g. for one or more of single platelets, platelets in platelet aggregates, platelets in leukocyte-platelet aggregates, aggregated platelets in cell aggregates of any type, single leukocytes, leukocytes in leukocyte-platelet aggregates and combinations thereof.

In a preferred embodiment, the suspension further comprises a viscoelastic fluid. The viscoelastic fluid may in particular comprise a shear-thinning polymer having a molecular weight between 2 MDa and 10 MDa, in one embodiment between 3.5 MDa and 4.5 MDa. A mass fraction of the shear-thinning polymer in the suspension may less than 0.2%, in some embodiments between 0.03% and 0.12%, preferably between 0.04% and 0.06%. This may allow for a reliable viscoelastic focusing of cell aggregates in the focal plane of the microscope.

The viscoelastic and/or hydrodynamic focusing may adapted such that single cells, in particular single platelets, in the suspension are also focused in the focal plane of the quantitative phase-contrast microscope, e.g. by an appropriate choice of the composition of the viscoelastic fluid, the flow velocity of the suspension, the physical dimensions of the microfluidic channel, the arrangement of the microfluidic channel relative to the focal point of the microscope and/or the number, arrangement and flow velocities of sheath flows for hydrodynamic focusing as detailed above.

Preferably, preparing the suspension does not comprise a lysis of erythrocytes, a sphering of platelets and/or of erythrocytes and/or a labelling or staining of cells, e.g. as detailed above. For example, preparing the suspension may only comprise diluting the blood sample drawn from a patient and, optionally, adding a viscoelastic fluid or substance and/or a coagulation-inhibiting substance thereto.

In some examples of the method according to the first aspect of the present disclosure and in some embodiments of the method according to the invention, identifying cell aggregates in the one or more phase shift images may also comprise identifying cell aggregates comprising one or more bacteria, in particular cell aggregates comprising one or more bacteria and blood cells, for example cell aggregates consisting of one or more bacteria and one or more platelets and/or one or more leukocytes. In one embodiment, identifying cell aggregates in the one or more phase shift images may also comprise identifying cell aggregates comprising one or more bacteria and/or one or more tumor cells.

In some examples of the method according to the first aspect of the present disclosure and in some embodiments of the method according to the invention, the method may comprise taking phase shift images of the biological cells in the suspension at different flow velocities or flow rates (e.g. at two or more flow velocities/rates) of the flow of the suspension and/or at different shear rates (e.g. at two or more shear rates) in the flow of the suspension, i.e. the one or more phase shift images may be taken at different flow velocities and/or at different shear rates. Taking the one or more phase shift images may for example comprise taking a first phase shift image at a first flow velocity or rate and/or at a first shear rate and taking a second phase shift image at a second flow velocity or rate and/or at a second shear rate different from the first flow velocity/rate and first shear rate, respectively.

The present invention also provides a device for detecting cell aggregates of biological cells using a method of any one of the embodiments according to the invention described herein. The device comprises a mount configured to receive a microfluidic system comprising a measurement volume. The device further comprises a microscope configured to take phase shift images of biological cells in the measurement volume. The device also comprises a microfluidics unit configured to receive a sample fluid comprising biological cells from a blood sample, wherein the microfluidics unit is configured to generate a flow of the sample fluid through the measurement volume to viscoelastically and/or hydrodynamically focus cell aggregates in the sample fluid flow in a focal plane of the microscope. The device further comprises a controller configured to identify platelet aggregates in a phase shift image of the sample fluid flow obtained from the microscope. The device according to the present invention may also be referred to as the device according to the second aspect of the present disclosure.

Some or all of the components of the device according to the invention may be formed or implemented as described above for the device according to the first aspect of the present disclosure or vice-versa. The device according to the invention may include some or all of the features and/or components described above for the device according to the first aspect of the present disclosure or vice-versa. In some embodiments, the device according to the invention may be implemented as described above for the device 100 of Figs. 1 and 2.

The microfluidic unit is configured to receive a sample fluid, e.g. a suspension as described above, comprising biological cells from a blood sample, for example a whole blood sample or a blood fraction sample. In some embodiments, the sample fluid may further comprise a viscoelastic fluid as detailed below. The microfluidics unit may be configured to focus cell aggregates in the sample fluid by one or both of viscoelastic focusing and hydrodynamic focusing. The microfluidic system may for example comprise a hydrodynamic focusing junction in fluid communication with the measurement volume and the microfluidics unit may be configured to provide a sheath fluid to the hydrodynamic focusing junction, e.g. as detailed above.

The microfluidic unit may be configured to receive a sample fluid with varying flow rates or flow velocities and/or to generate a flow of the sample fluid with varying flow rates or flow velocities, e.g. to increase the shear rate or shear stress to probe the interaction strength of the cell aggregates and their composition. Differences of aggregate concentration or composition at different shear stress levels can indicate inflammation, thrombosis, and infection status. Such assay conditions can be combined with activators or inhibitors for cell aggregate formation, to probe the presence or absence of molecular interaction mechanism between cells and their respective strength. Generating a flow of the sample fluid with varying flow rates or flow velocities may for example allow for taking phase shift images at different flow velocities or flow rates as described above.

The controller is configured to identify a particular type of cell aggregates, namely platelet aggregates. In addition, the controller may also be configured to identify one or more other types of cell aggregates, e.g. leukocyte-platelet aggregates, and/or one or more types of single cells, e.g. single platelets and/or single leukocytes. The controller may be configured to identify the respective cell aggregates and/or single cells as detailed above. Preferably, the controller is configured to execute some or all of the steps of the method of any one of the examples according to the first aspect of the present disclosure and/or any one of the embodiments according to the invention described herein.

The controller may in particular be configured to determine a total number or fraction of platelet aggregates in the phase shift images and/or to determine a number or fraction of platelet aggregates comprising at least a predefined number of cells (for example a number or fraction of platelet aggregates comprising three or more cells), e.g. as described above.

In some embodiments, the controller may be configured to identify leukocyte-platelet aggregates in the phase shift image, for example as described above. Preferably, the controller is configured to determine a total number or fraction of leukocyte-platelet aggregates in the phase shift image, a number or fraction of leukocyte-platelet aggregates comprising at least a predefined number of cells (e.g. three or more cells) in the phase shift image and/or a number or fraction of leukocyte-platelet aggregates comprising at least a predefined number of leukocytes (e.g. two or more leukocytes and/or three or more leukocytes) in the phase shift image. The controller may further be configured to determine a type of leukocyte for one or more leukocytes in the phase shift image, e.g. as described above.

The controller may be configured to determine a size distribution of a plurality of cells, one or more parameters pertaining to said size distribution and/or a granularity measure from the phase shift image, wherein the granularity measure characterizes a granularity of one or more cells in the phase shift image, for example as described above.

In a preferred embodiment, the sample fluid further comprises a viscoelastic fluid. The viscoelastic fluid may in particular comprise a shear-thinning polymer having a molecular weight between 2 MDa and 10 MDa, in one embodiment between 3.5 MDa and 4.5 MDa. A mass fraction of the shear-thinning polymer in the sample fluid may be less than 0.2%, in some embodiments between 0.03% and 0.12%, preferably between 0.04% and 0.06%. In some embodiments, the device may comprise a sample preparation unit that is configured to provide the viscoelastic fluid comprising the shear-thinning polymer with a molecular weight between 2 MDa and 10 MDa, in one embodiment between 3.5 MDa and 4.5 MDa, to prepare the sample fluid comprising biological cells from the sample and the viscoelastic fluid, wherein the mass fraction of the shear-thinning polymer in the sample fluid is less than 0.2%. The sample preparation unit may be configured to adjust a mass fraction of the shear-thinning polymer in the sample fluid and/or to dilute the sample fluid, e.g. as detailed above.

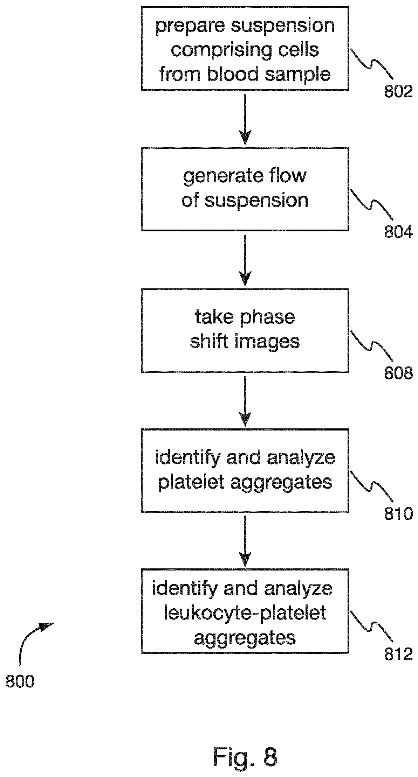

Fig. 8 shows a flow chart of a method 800 for detecting cell aggregates of biological cells using a quantitative phase-contrast microscope according to an exemplary embodiment of the invention. The method 800 may e.g. be used to detect and analyze platelet aggregates and leukocyte-platelet aggregates in a blood sample of a patient as an indicator for an infection (e.g. a viral infection such as Covid-19), which is used as a non-limiting example for illustrative purposes in the following. The method 800 may for example be implemented with the device 100 and the microfluidic system 200 of Figs. 1 and 2, which are used as examples for illustration purposes in the following. This is, however, not intended to be limiting in any way and the method 800 may also be implemented using a different device with a quantitative phase-contrast microscope and/or using a different microfluidic system. In some embodiments, the controller 124 of the device 100 may be configured to execute some or all of the steps of the method 800. The method 800 is not limited to the order of execution shown in the flowchart of Fig. 8. As far as technically feasible, the method 800 may be executed in an arbitrary order and parts thereof may be executed simultaneously at least in part, for example steps 810 and 812.

The method 800 comprises, in step 802, preparing a suspension comprising biological cells from a whole blood sample or from a blood fraction sample, e.g. using the sample preparation unit 122. The sample may for example have been drawn from a patient having a suspected or confirmed infection prior to execution of the method 800 and may e.g. contain arterial and/or venous blood. In some embodiments, one or more coagulation-inhibiting substances, such as ethylenediamine tetra-acetic acid (EDTA), heparin or citrate, may be added to the sample or to the suspension to prevent coagulation. To prepare the suspension, the sample may be diluted, e.g. by a factor between 1:50 and 1:200, in one embodiment by a factor of 1:100. In some embodiments, a viscoelastic fluid or a viscoelastic substance such as a shear-thinning polymer may be added to prepare a viscoelastic suspension, for example as detailed above for step 302 of method 300.

In step 804, a flow 208A of the suspension is generated along the measurement volume 202 of the microfluidic system 200, e.g. using the microfluidic unit 120. The flow 208A is generated such that cell aggregates 102A, 102B, in particular the platelet aggregates 102A, in the suspension are viscoelastically and/or hydrodynamically focused in a focal plane of the microscope 108, e.g. as described above for steps 304 and 306 of method 300. In some embodiments, the suspension may not be viscoelastic and only hydrodynamic focusing may be employed. Preferably, a combination of viscoelastic and hydrodynamic focusing is employed.

The method 800 further comprises, in step 808, taking one or more phase shift images of biological cells in the suspension, e.g. of the single platelets 104A, the platelet aggregates 102A, the single leukocytes 104B and/or the leukocyte-platelet aggregates 102B, using the microscope 108, for example as described above for step 308 of method 300.

In step 810, platelet aggregates 102A are identified in the one or more phase shift images and analyzed, e.g. as a diagnostic, prognostic and/or therapeutic indicator for the infection, in particular as an indicator for complications of the patient that have occurred and/or are about to occur. The identification and analysis of the platelet aggregates 102A may be similar as described above for steps 310 and 312 of method 300.

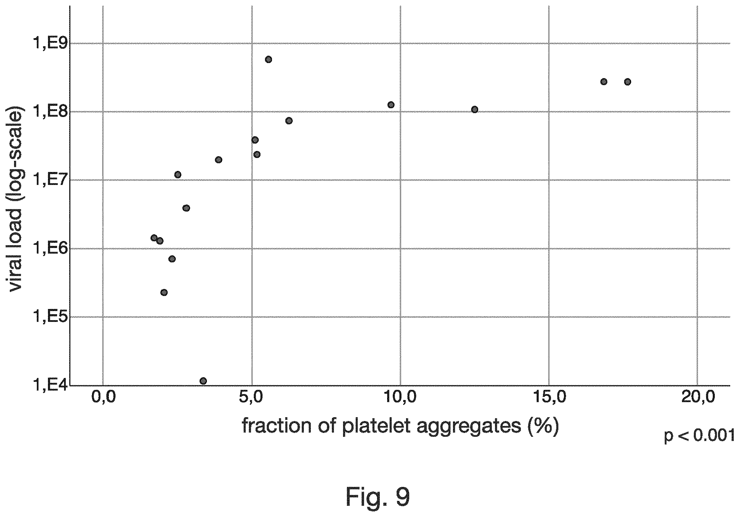

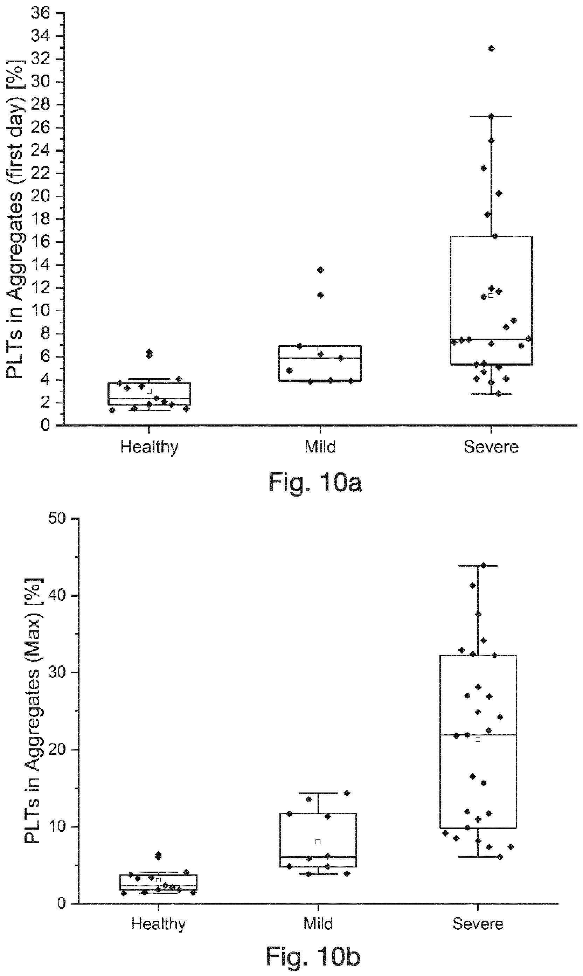

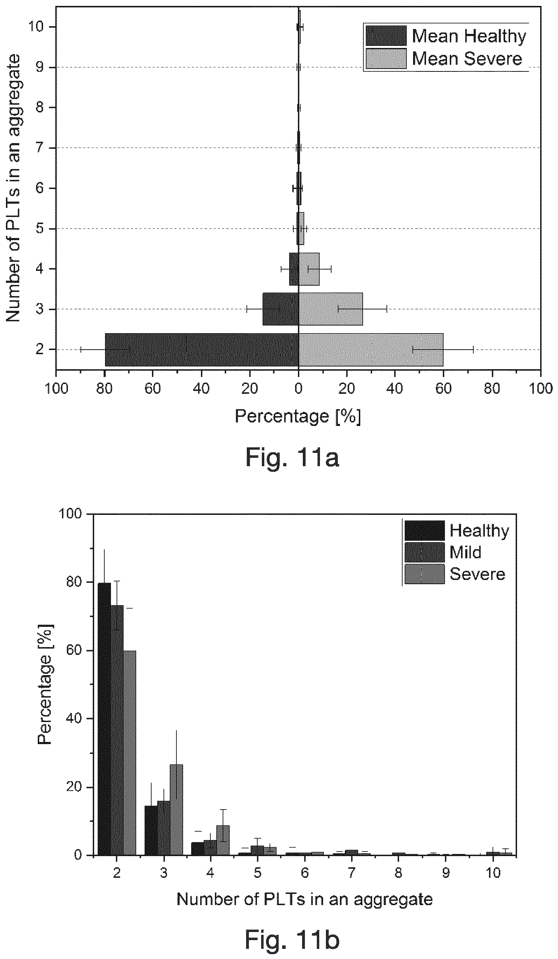

Step 810 may in particular comprise determining a total number or fraction of platelet aggregates in the one or more phase shift images, for example a percentage of platelets that are contained in platelet aggregates and/or a ratio of the number of platelet aggregates to the total number of single platelets and platelet aggregates. Additionally or alternatively, step 810 may also comprise determining a fraction of aggregated platelets that are contained in cell aggregates of any type (platelets in aggregates). As detailed below with reference to Figs. 9, 10a, and 10b, the fraction of platelet aggregates and the fraction of platelets in aggregates (aggregated platelets) may be an indicator for complications of an infected patient, in particular of a Covid-19 patient. Additionally or alternatively, step 810 may also comprise determining a cell number distribution of the platelet aggregates, e.g. as described below with reference to Figs. 11a, 11b and/or determining a number or fraction of platelet aggregates comprising at least a predefined number of cells (e.g. the weight or extent of a wing of the cell number distribution).

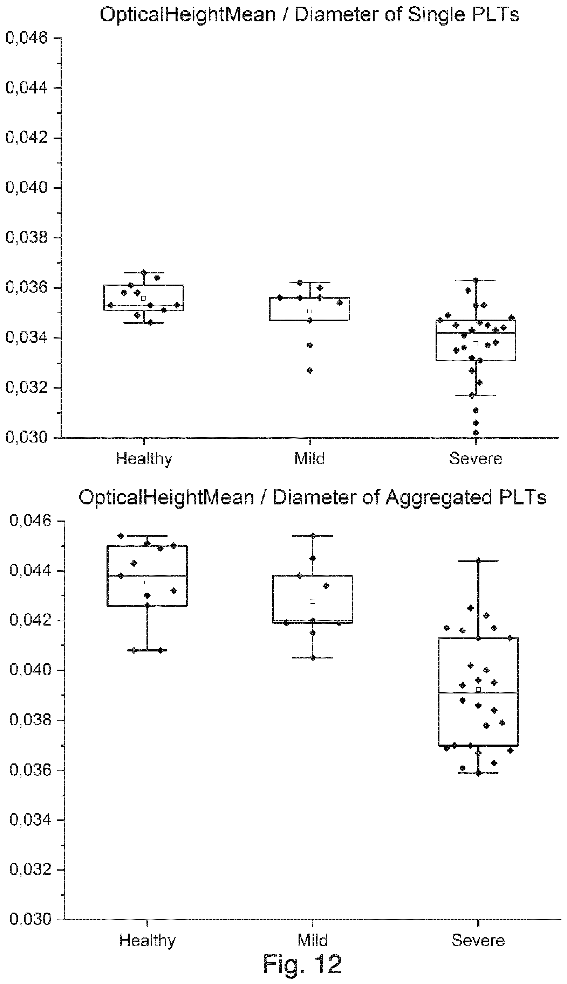

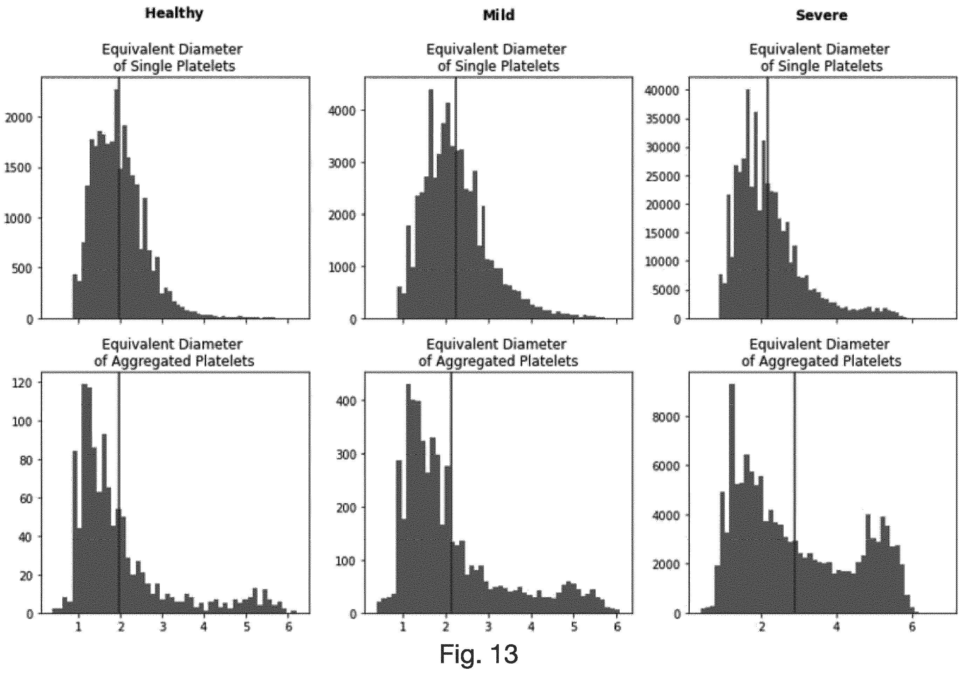

Step 810 may also comprise determining a granularity measure for single platelets, for platelets in platelet aggregates and/or for aggregated platelets in cell aggregates of any type from the one or more phase shift images, e.g. as detailed below with reference to Fig. 12. Additionally or alternatively, step 810 may also comprise determining a size distribution of single platelets, for platelets in platelet aggregates and/or for aggregated platelets in cell aggregates of any type and/or determining one or more parameters pertaining to said size distribution from the one or more phase shift images, e.g. as described below with reference to Fig. 13.

In some embodiments, the method 800 may further comprise, in step 812, identifying leukocyte-platelet aggregates 102B in the one or more phase shift images and analyzing the leukocyte-platelet aggregates 102B. The leukocyte-platelet aggregates 102B may also serve as a diagnostic, prognostic and/or therapeutic indicator for the infection, in particular in combination with information obtained from the platelet aggregates 102A. The identification and analysis of the leukocyte-platelet aggregates 102B may be similar as described above for steps 310 and 312 of method 300.

Step 812 may in particular comprise determining a total number or fraction of leukocyte-platelet aggregates in the one or more phase shift images, for example a percentage of platelets that are contained in leukocyte-platelet aggregates and/or a ratio of the number of leukocyte-platelet aggregates to the total number of single cells and cell aggregates of any type. Additionally or alternatively, step 812 may also comprise determining one or more of a cell number distribution of the leukocyte-platelet aggregates, a number or fraction of leukocyte-platelet aggregates comprising at least a predefined number of cells and a number or fraction of leukocyte-platelet aggregates comprising at least a predefined number of leukocytes. Additionally or alternatively, step 812 may also comprise determining one or more of a granularity measure, a size distribution and/or one or more parameters pertaining to said size distribution for one or more of single leukocytes, platelets and/or leukocytes in leukocyte-platelet aggregates and aggregated leukocytes in cell aggregates of any type.

Figs. 9 to 13 show results of a study conducted by the present inventors on patients having an acute Covid-19 infection and a control group of healthy individuals (no acute Covid-19 infection and no chronic cardiovascular or inflammatory disease). The results were obtained by analyzing blood samples of the subjects with a quantitative phase-contrast microscope using a method for detecting cell aggregates of biological cells according to the invention.

Fig. 9 depicts experimental data on the viral load of Covid-19 patients as a function of the fraction of platelet aggregates in blood samples of the patients. The fractions of platelet aggregates were determined with a quantitative phase-contrast microscope using a method for detecting cell aggregates of biological cells according to the invention. The plot shows a clear correlation between the viral load of the patients and the observed fraction of platelet aggregates, demonstrating that platelet aggregates constitute a promising biomarker for Covid-19 in particular and viral infections in general. Healthy individuals were found to have a fraction of platelet aggregates of less than 3%, whereas fractions above this threshold indicate a Covid-19 infection.

Figs. 10a, 10b depict the fraction of platelets in aggregates (ratio of the number of platelets in aggregates of any type to the total number of platelets) for different groups of patients treated in intensive care (ICU). In each subplot, the left dataset are healthy individuals, the central dataset Covid-19 patients with a World Health Organization (WHO) Covid-19 severity score of 3-5 ("mild") and the right data set Covid-19 patients with a WHO Covid-19 severity score greater than or equal to 8 ("severe"), cf. Lancet Infect Dis 2020, 20:e192-197 for more details on the WHO Covid-19 severity score. Fig. 10a shows the results for samples drawn from the patients on the first day in hospital or first day in intensive care unit (ICU), whereas Fig. 10b shows the results averaged over the entire stay of the respective patient in ICU, wherein a new sample was taken on each day that the respective patient stayed in ICU . In both cases, a significant increase of the fraction of platelets in aggregates is observed for patients with severe Covid-19, which in the case of Fig. 10a demonstrates the potential of platelets in aggregates as a prognostic indicator for Covid-19. Similar results were also observed for the fraction of platelet aggregates in the samples.

Fig. 11a, 11b depict experimentally determined cell number distributions of platelet aggregates in blood samples of Covid-19 patients. Fig. 11a shows histograms of the number of platelets in the identified platelet aggregates for the group of patients with severe Covid-19 in comparison with healthy individuals. Fig. 11b shows the same data, but including data for the group of patients with mild Covid-19. While Covid-19 patients exhibit lower levels of platelet aggregates consisting of two platelets, the number of platelet aggregates consisting of three of more platelets increases. This illustrates that the number or fraction of platelet aggregates comprising three or more cells and/or a mean number of platelets per platelet aggregate may serve as an indicator for a Covid-19 infection and the severity thereof.

Fig. 12 depicts examples of experimentally determined granularity measures for patients having a Covid-19 infection with different degrees of severity in comparison with healthy individuals. The upper subplot shows the ratio (arbitrary units) of the optical height median (median phase shift of all pixel values in a segmented cell, "OpticalHeightMean") to the diameter of single platelets, whereas the lower subplot shows the same quantity for aggregated platelets contained in any type of aggregate. This ratio is known to correlate with the granularity of the respective cell and thus constitutes an example of a granularity measure. Platelets in samples from patients with a severe infection exhibit a lower granularity than in samples from healthy individuals.

Fig. 13 depicts experimentally determined size distributions of single platelets (top row) and aggregated platelets in any type of aggregate (bottom row) for healthy individuals (left column), patients with mild Covid-19 (central column) and patients with severe Covid-19 (right column). The plots show histograms of the equivalent diameter of individual platelets determined from phase shift images obtained with a method according to the invention. For patients with Covid-19, the distribution of platelet sizes is slightly shifted to the right towards larger diameters. For patients with a severe infection, a pronounced second peak can be observed at diameter of about 5 µm, which might be associated with the occurrence of reticulated platelets (i.e. immature platelets, which are highly active and tend to aggregate easily).

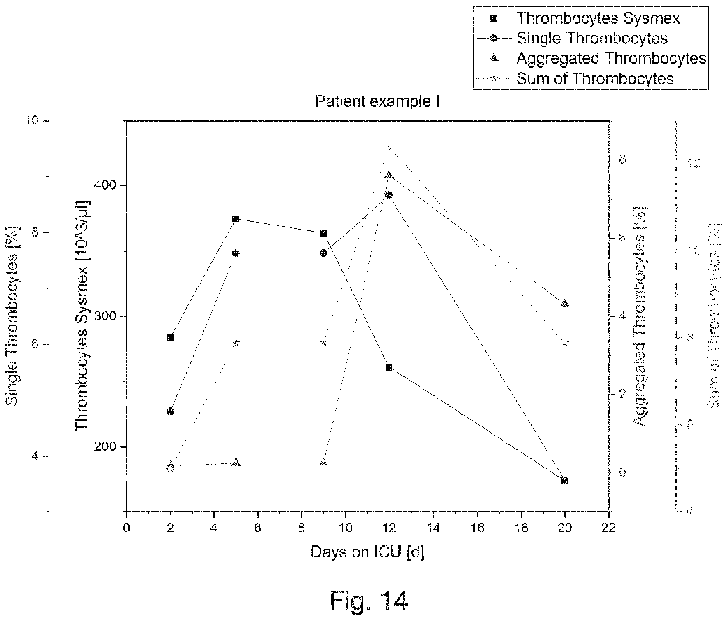

Fig. **14** depicts the evolution of the fraction of single platelets ("single thrombocytes"), the fraction of aggregated platelets ("aggregated thrombocytes") and the total fraction of platelets ("sum of thrombocytes") over time ("days on ICU") in samples from a Covid-19 patient determined using a method according to invention, wherein the fractions shown in Fig. **14** are normalized to the total number of cells. For comparison, the platelet count determined using a conventional flow cytometry method ("thrombocytes sysmex") from the same samples is shown as a reference. The latter was determined with a Sysmex XN flow cytometer (Sysmex Europe GmbH, Norderstedt, Germany), which cannot resolve platelet aggregates.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - device for detecting cell aggregates
102A - platelet aggregate
102B - leukocyte-platelet aggregate
104A - platelet
104B - leukocyte
106 - mount
108 - microscope
108A - microscope controller
110 - objective
112 - holographic imaging system
114 - imaging lens
116 - camera
118 - illumination source
120 - microfluidics unit
122 - sample preparation unit
124 - controller
200 - microfluidic system
202 - measurement volume
202A - detection window
202B - illumination window
204 - hydrodynamic focusing junction
206A - sample channel
206B - sheath flow channel
208A - sample fluid flow
208B - sheath flow
300 - method for detecting cell aggregates
302 - step of preparing a suspension comprising biological cells from a sample and a viscoelastic fluid
304 - step of generating a flow of the suspension
306 - step of generating two or more sheath flows
308 - step of taking one or more phase shift images
310 - step of identifying cell aggregates in the one or more phase shift images
312 - step of analyzing cell aggregates in the one or more phase shift images
800 - method for detecting cell aggregates
802 - step of preparing a suspension comprising biological cells from a blood sample
804 - step of generating a flow of the suspension
806 - step of taking one or more phase shift images
808 - step of identifying and analyzing platelet aggregates
810 - step of identifying and analyzing leukocyte-platelet aggregates

## Claims

1. A method (800) for detecting cell aggregates (102A, 102B) of biological cells (104A, 104B) using a quantitative phase-contrast microscope (108), the method (800) comprising:
preparing a suspension comprising biological cells (104A, 104B) from a sample;
generating a flow (208A) of the suspension along a microfluidic channel (202) to viscoelastically and/or hydrodynamically focus cell aggregates (102A, 102B) in the suspension in a focal plane of the quantitative phase-contrast microscope (108);
taking one or more phase shift images of the biological cells (104A, 104B) in the suspension using the quantitative phase-contrast microscope (108); and
identifying cell aggregates (102A, 102B) in the one or more phase shift images,
wherein the sample is a whole blood sample or a blood fraction sample and identifying cell aggregates (102A, 102B) in the one or more phase shift images comprises identifying platelet aggregates (102A) in the one or more phase shift images.

2. The method (800) of claim 1, further comprising determining a total number or fraction of platelet aggregates (102A) in the one or more phase shift images, in particular wherein the method (800) further comprises using the total number or fraction of platelet aggregates (102) as an indicator for complications of an infected patient, in particular of a Covid-19 patient.

3. The method (800) of claim 1 or 2, wherein:
identifying the cell aggregates (102A, 102B) in the one or more phase shift images comprises determining a number of cells in the respective cell aggregate (102A, 102B); and/or
the method (800) further comprises determining a number or fraction of platelet aggregates comprising at least a predefined number of cells, in particular determining a number or fraction of platelet aggregates comprising three or more cells.

4. The method (800) of any one of the preceding claims, wherein identifying cell aggregates (102A, 102B) in the one or more phase shift images further comprises identifying leukocyte-platelet aggregates (102B) in the one or more phase shift images, in particular wherein the method further comprises:
determining a total number or fraction of leukocyte-platelet aggregates (102B) in the one or more phase shift images; and/or
determining a number or fraction of leukocyte-platelet aggregates (102B) comprising at least a predefined number of cells, in particular determining a number of leukocyte-platelet aggregates (102B) comprising three or more cells.

5. The method (800) of claim 4, further comprising determining a number or fraction of leukocyte-platelet aggregates (102B) comprising at least a predefined number of leukocytes, in particular wherein:
the method (800) comprises determining a number or fraction of leukocyte-platelet aggregates (102B) comprising two or more leukocytes (104B) and/or determining a number or fraction of leukocyte-platelet aggregates (102B) comprising three or more leukocytes (104B); and
the presence of leukocyte-platelet aggregates comprising two or more leukocytes and/or the presence of leukocyte-platelet aggregates comprising three or more leukocytes is used as an indicator for an infection, in particular as an indicator for a viral infection and/or for a bacterial infection.

6. The method (800) of any one of the preceding claims, wherein the method (800) further comprises determining a total number or fraction of aggregated platelets that are contained in cell aggregates (102A, 102B) of any type in the one or more phase shift images.

7. The method (800) of any one of the preceding claims, wherein the method (800) further comprises:
determining a granularity measure from the one or more phase shift images, wherein the granularity measure characterizes a granularity of one or more cells in the one or more phase shift images; and/or
determining a size distribution of a plurality of cells and/or one or more parameters pertaining to said size distribution from the one or more phase shift images.

8. The method (800) of claim 7, wherein the granularity measure, the size distribution and/or the one or more parameters pertaining to said size distribution are determined for single and/or aggregated cells of a particular type, preferably for single platelets, for platelets in platelet aggregates, for platelets in leukocyte-platelet aggregates and/or for aggregated platelets in cell aggregates of any type.

9. The method (800) of any one of the preceding claims, wherein:
the suspension further comprises a viscoelastic fluid, in particular wherein the viscoelastic fluid comprises a shear-thinning polymer having a molecular weight between 2 MDa and 10 MDa and wherein a mass fraction of the shear-thinning polymer in the suspension is less than 0.2%; and/or
the viscoelastic and/or hydrodynamic focusing is adapted such that single cells (104A, 104B) in the suspension are also focused in the focal plane of the quantitative phase-contrast microscope; and/or
preparing the suspension does not comprise a lysis of erythrocytes, a sphering of platelets and/or of erythrocytes and/or a labelling or staining of cells.

10. The method (800) of any one of the preceding claims, wherein taking the one or more phase shift images of the biological cells (104A, 104B) in the suspension using the quantitative phase-contrast microscope (108) comprises taking a first phase shift image of the biological cells (104A, 104B) in the suspension at a first flow velocity of the suspension and/or at a first shear rate in the suspension and taking a second phase shift image of the biological cells (104A, 104B) in the suspension at a second flow velocity of the suspension different from the first flow velocity and/or at a second shear rate in the suspension different from the first shear rate.

11. A device (100) for detecting cell aggregates (102A, 102B) of biological cells (104A, 104B) using a method (800) according to any one of the preceding claims, the device (100) comprising:
a mount (106) configured to receive a microfluidic system (200) comprising a measurement volume (202);
a microscope (108) configured to take phase shift images of biological cells (104A, 104B) in the measurement volume (202);
a microfluidics unit (120) configured to receive a sample fluid comprising biological cells (104A, 104B) from a blood sample, wherein the microfluidics unit (120) is configured to generate a flow (208A) of the sample fluid through the measurement volume (202) to viscoelastically and/or hydrodynamically focus cell aggregates (102A, 102B) in the sample fluid flow (208A) in a focal plane of the microscope (108); and
a controller (124) configured to identify platelet aggregates (102A) in a phase shift image of the sample fluid flow (208A) obtained from the microscope (108).

12. The device (100) of claim 11, wherein the controller (124) is further configured to:
determine a total number or fraction of platelet aggregates (102) in the phase shift image, a number or fraction of platelet aggregates comprising at least a predefined number of cells in the phase shift image and/or a total number or fraction of aggregated platelets that are contained in cell aggregates (102A, 102B) of any type in the phase shift image; and/or
identify leukocyte-platelet aggregates (102B) in the phase shift image, in particular wherein the controller (124) is configured to determine a total number or fraction of leukocyte-platelet aggregates (102B) in the phase shift image, a number or fraction of leukocyte-platelet aggregates (102B) comprising at least a predefined number of cells in the phase shift image and/or a number or fraction of leukocyte-platelet aggregates (102B) comprising at least a predefined number of leukocytes in the phase shift image.

13. The device (100) of claim 11 or 12, wherein the controller (124) is further configured to determine a size distribution of a plurality of cells, one or more parameters pertaining to said size distribution and/or a granularity measure from the phase shift image, wherein the granularity measure characterizes a granularity of one or more cells in the phase shift image.

14. The device (100) of any one of claims 11 to 13, wherein the sample fluid further comprises a viscoelastic fluid, in particular wherein the viscoelastic fluid comprises a shear-thinning polymer having a molecular weight between 2 MDa and 10 MDa and a mass fraction of the shear-thinning polymer in the sample fluid is less than 0.2%;, the device (100) preferably further comprising a sample preparation unit (122) configured to provide the viscoelastic fluid comprising the shear-thinning polymer with a molecular weight between 2 MDa and 10 MDa to prepare the sample fluid comprising biological cells (104A, 104B) from the sample and the viscoelastic fluid, wherein the mass fraction of the shear-thinning polymer in the sample fluid is less than 0.2%.

15. The device (100) of any one of claims 11 to 14, wherein the controller (124) is configured to execute the method (800) according to any one of claims 1 to 10.

## Patentansprüche

1. Verfahren (800) zum Detektieren von Zellaggregaten (102A, 102B) von biologischen Zellen (104A, 104B) unter Verwendung eines quantitativen Phasenkontrastmikroskops (108), wobei das Verfahren (800) Folgendes umfasst:
Bereitstellen einer Suspension, die biologische Zellen (104A, 104B) aus einer Probe umfasst;
Erzeugen eines Flusses (208A) der Suspension entlang eines mikrofluidischen Kanals (202), um Zellaggregate (102A, 102B) in der Suspension in einer Fokalebene des quantitativen Phasenkontrastmikroskops (108) viskoelastisch und/oder hydrodynamisch zu fokussieren;
Aufnehmen eines oder mehrerer Phasenverschiebungsbilder der biologischen Zellen (104A, 104B) in der Suspension unter Verwendung des quantitativen Phasenkontrastmikroskops (108); und
Identifizieren von Zellaggregaten (102A, 102B) in dem einen oder den mehreren Phasenverschiebungsbildern,
wobei die Probe eine Vollblutprobe oder eine Blutfraktionsprobe ist und das Identifizieren von Zellaggregaten (102A, 102B) in dem einen oder den mehreren Phasenverschiebungsbildern das Identifizieren von Thrombozytenaggregaten (102A) in dem einen oder den mehreren Phasenverschiebungsbildern umfasst.

2. Verfahren (800) nach Anspruch 1, ferner umfassend das Bestimmen einer Gesamtanzahl oder eines Anteils von Thrombozytenaggregaten (102A) in dem einen oder den mehreren Phasenverschiebungsbildern, insbesondere wobei das Verfahren (800) ferner das Verwenden der Gesamtanzahl oder des Anteils von Thrombozytenaggregaten (102) als Indikator für Komplikationen eines infizierten Patienten, insbesondere eines Covid-19-Patienten, umfasst.

3. Verfahren (800) nach Anspruch 1 oder 2, wobei:
das Identifizieren der Zellaggregate (102A, 102B) in dem einen oder den mehreren Phasenverschiebungsbildern das Bestimmen einer Anzahl von Zellen in dem jeweiligen Zellaggregat (102A, 102B) umfasst; und/oder
das Verfahren (800) ferner das Bestimmen einer Anzahl oder eines Anteils von Thrombozytenaggregaten, die mindestens eine vordefinierte Anzahl von Zellen umfassen, insbesondere das Bestimmen einer Anzahl oder eines Anteils von Thrombozytenaggregaten, die drei oder mehr Zellen umfassen, umfasst.

4. Verfahren (800) nach einem der vorhergehenden Ansprüche, wobei das Identifizieren von Zellaggregaten (102A, 102B) in dem einen oder den mehreren Phasenverschiebungsbildern ferner das Identifizieren von Leukozyten-Thrombozyten-Aggregaten (102B) in dem einen oder den mehreren Phasenverschiebungsbildern umfasst, insbesondere wobei das Verfahren ferner Folgendes umfasst:
Bestimmen einer Gesamtanzahl oder eines Anteils von Leukozyten-Thrombozyten-Aggregaten (102B) in dem einen oder den mehreren Phasenverschiebungsbildern; und/oder
Bestimmen einer Anzahl oder eines Anteils von Leukozyten-Thrombozyten-Aggregaten (102B), die mindestens eine vordefinierte Anzahl von Zellen umfassen, insbesondere Bestimmen einer Anzahl von Leukozyten-Thrombozyten-Aggregaten (102B), die drei oder mehr Zellen umfassen.

5. Verfahren (800) nach Anspruch 4, ferner umfassend das Bestimmen einer Anzahl oder eines Anteils von Leukozyten-Thrombozyten-Aggregaten (102B), die mindestens eine vordefinierte Anzahl von Leukozyten umfassen, insbesondere wobei:
das Verfahren (800) das Bestimmen einer Anzahl oder eines Anteils von Leukozyten-Thrombozyten-Aggregaten (102B), die zwei oder mehr Leukozyten (104B) umfassen, und/oder das Bestimmen einer Anzahl oder eines Anteils von Leukozyten-Thrombozyten-Aggregaten (102B), die drei oder mehr Leukozyten (104B) umfassen, umfasst; und
das Vorhandensein von Leukozyten-Thrombozyten-Aggregaten, die zwei oder mehr Leukozyten umfassen, und/oder das Vorhandensein von Leukozyten-Thrombozyten-Aggregaten, die drei oder mehr Leukozyten umfassen, als Indikator für eine Infektion verwendet wird, insbesondere als Indikator für eine Virusinfektion und/oder für eine bakterielle Infektion.

6. Verfahren (800) nach einem der vorhergehenden Ansprüche, wobei das Verfahren (800) ferner das Bestimmen einer Gesamtanzahl oder eines Anteils von aggregierten Thrombozyten, die in Zellaggregaten (102A, 102B) eines beliebigen Typs enthalten sind, in dem einen oder den mehreren Phasenverschiebungsbildern umfasst.

7. Verfahren (800) nach einem der vorhergehenden Ansprüche, wobei das Verfahren (800) ferner Folgendes umfasst:
Bestimmen eines Granularitätsmaßes aus dem einen oder den mehreren Phasenverschiebungsbildern, wobei das Granularitätsmaß eine Granularität einer oder mehrerer Zellen in dem einen oder den mehreren Phasenverschiebungsbildern charakterisiert; und/oder
Bestimmen einer Größenverteilung einer Vielzahl von Zellen und/oder eines oder mehrerer Parameter, die sich auf die Größenverteilung beziehen, aus dem einen oder den mehreren Phasenverschiebungsbildern.

8. Verfahren (800) nach Anspruch 7, wobei das Granularitätsmaß, die Größenverteilung und/oder der eine oder die mehreren Parameter, die sich auf die Größenverteilung beziehen, für einzelne und/oder aggregierte Zellen eines bestimmten Typs bestimmt werden, vorzugsweise für einzelne Thrombozyten, für Thrombozyten in Thrombozytenaggregaten, für Thrombozyten in Leukozyten-Thrombozytenaggregaten und/oder für aggregierte Thrombozyten in Zellaggregaten eines beliebigen Typs.

9. Verfahren (800) nach einem der vorhergehenden Ansprüche, wobei:
die Suspension ferner ein viskoelastisches Fluid umfasst, insbesondere wobei das viskoelastische Fluid ein scherverdünnendes Polymer mit einem Molekulargewicht zwischen 2 MDa und 10 MDa umfasst und wobei ein Massenanteil des scherverdünnenden Polymers in der Suspension weniger als 0,2 % beträgt; und/oder
das viskoelastische und/oder hydrodynamische Fokussieren derart angepasst ist, dass einzelne Zellen (104A, 104B) in der Suspension auch in der Fokalebene des quantitativen Phasenkontrastmikroskops fokussiert werden; und/oder
das Bereitstellen der Suspension keine Lyse von Erythrozyten, keine Sphärierung von Thrombozyten und/oder von Erythrozyten und/oder keine Markierung oder Färbung von Zellen umfasst.

10. Verfahren (800) nach einem der vorhergehenden Ansprüche, wobei das Aufnehmen des einen oder der mehreren Phasenverschiebungsbilder der biologischen Zellen (104A, 104B) in der Suspension unter Verwendung des quantitativen Phasenkontrastmikroskops (108) das Aufnehmen eines ersten Phasenverschiebungsbildes der biologischen Zellen (104A, 104B) in der Suspension bei einer ersten Fließgeschwindigkeit der Suspension und/oder bei einer ersten Schergeschwindigkeit in der Suspension und das Aufnehmen eines zweiten Phasenverschiebungsbildes der biologischen Zellen (104A, 104B) in der Suspension bei einer zweiten Fließgeschwindigkeit der Suspension, die sich von der ersten Fließgeschwindigkeit unterscheidet, und/oder bei einer zweiten Schergeschwindigkeit in der Suspension, die sich von der ersten Schergeschwindigkeit unterscheidet, umfasst.

11. Vorrichtung (100) zum Detektieren von Zellaggregaten (102A, 102B) von biologischen Zellen (104A, 104B) unter Verwendung eines Verfahrens (800) nach einem der vorhergehenden Ansprüche, wobei die Vorrichtung (100) Folgendes umfasst:
eine Halterung (106), die dazu eingerichtet ist, ein mikrofluidisches System (200) aufzunehmen, das ein Messvolumen (202) umfasst;
ein Mikroskop (108), das dazu eingerichtet ist, Phasenverschiebungsbilder von biologischen Zellen (104A, 104B) in dem Messvolumen (202) aufzunehmen;
eine mikrofluidische Einheit (120), die dazu eingerichtet ist, ein Probenfluid aufzunehmen, das biologische Zellen (104A, 104B) aus einer Blutprobe umfasst, wobei die mikrofluidische Einheit (120) dazu eingerichtet ist, einen Fluss (208A) des Probenfluids durch das Messvolumen (202) zu erzeugen, um Zellaggregate (102A, 102B) in dem Probenfluidfluss (208A) in einer Fokalebene des Mikroskops (108) viskoelastisch und/oder hydrodynamisch zu fokussieren; und
eine Steuerung (124), die dazu eingerichtet ist, Thrombozytenaggregate (102A) in einem Phasenverschiebungsbild des Probenfluidflusses (208A), das von dem Mikroskop (108) erhalten wird, zu identifizieren.

12. Vorrichtung (100) nach Anspruch 11, wobei die Steuerung (124) ferner dazu eingerichtet ist:
eine Gesamtanzahl oder einen Anteil von Thrombozytenaggregaten (102) in dem Phasenverschiebungsbild, eine Anzahl oder ein Anteil von Thrombozytenaggregaten, die mindestens eine vordefinierte Anzahl von Zellen umfasst, in dem Phasenverschiebungsbild und/oder eine Gesamtanzahl oder einen Anteil von aggregierten Thrombozyten, die in Zellaggregaten (102A, 102B) eines beliebigen Typs enthalten sind, in dem Phasenverschiebungsbild zu bestimmen; und/oder
Leukozyten-Thrombozyten-Aggregate (102B) in dem Phasenverschiebungsbild zu identifizieren, insbesondere wobei die Steuerung (124) dazu eingerichtet ist, eine Gesamtanzahl oder einen Anteil von Leukozyten-Thrombozyten-Aggregaten (102B) in dem Phasenverschiebungsbild, eine Anzahl oder einen Anteil von Leukozyten-Thrombozyten-Aggregaten (102B), die mindestens eine vordefinierte Anzahl von Zellen umfasst, in dem Phasenverschiebungsbild und/oder eine Anzahl oder einen Anteil von Leukozyten-Thrombozyten-Aggregaten (102B), die mindestens eine vordefinierte Anzahl von Leukozyten umfasst, in dem Phasenverschiebungsbild zu bestimmen.

13. Vorrichtung (100) nach Anspruch 11 oder 12, wobei die Steuerung (124) ferner dazu eingerichtet ist, eine Größenverteilung einer Vielzahl von Zellen, einen oder mehrere Parameter, die sich auf die Größenverteilung beziehen, und/oder ein Granularitätsmaß aus dem Phasenverschiebungsbild zu bestimmen, wobei das Granularitätsmaß eine Granularität einer oder mehrerer Zellen in dem Phasenverschiebungsbild charakterisiert.

14. Vorrichtung (100) nach einem der Ansprüche 11 bis 13, wobei das Probenfluid ferner ein viskoelastisches Fluid umfasst, insbesondere wobei das viskoelastische Fluid ein scherverdünnendes Polymer mit einem Molekulargewicht zwischen 2 MDa und 10 MDa umfasst und ein Massenanteil des scherverdünnenden Polymers in dem Probenfluid weniger als 0,2 % beträgt; wobei die Vorrichtung (100) vorzugsweise ferner eine Probenbereitstellungseinheit (122) umfasst, die dazu eingerichtet ist, das viskoelastische Fluid, das das scherverdünnende Polymer mit einem Molekulargewicht zwischen 2 MDa und 10 MDa umfasst, bereitzustellen, um das Probenfluid, das biologische Zellen (104A, 104B) aus der Probe und das viskoelastische Fluid umfasst, bereitzustellen, wobei der Massenanteil des scherverdünnenden Polymers in dem Probenfluid weniger als 0,2 % beträgt.

15. Vorrichtung (100) nach einem der Ansprüche 11 bis 14, wobei die Steuerung (124) dazu eingerichtet ist, das Verfahren (800) nach einem der Ansprüche 1 bis 10 auszuführen.

## Revendications

1. Procédé (800) de détection d'agrégats cellulaires (102A, 102B) de cellules biologiques (104A, 104B) à l'aide d'un microscope à contraste de phase quantitatif (108), le procédé (800) comprenant :
préparer une suspension comprenant des cellules biologiques (104A, 104B) à partir d'un échantillon ;
générer un écoulement (208A) de la suspension le long d'un canal microfluidique (202) afin de focaliser viscoélastiquement et/ou hydrodynamiquement des agrégats cellulaires (102A, 102B) dans la suspension dans un plan focal du microscope à contraste de phase quantitatif (108) ;
prendre une ou plusieurs images de déphasage des cellules biologiques (104A, 104B) dans la suspension à l'aide du microscope à contraste de phase quantitatif (108) ; et
identifier des agrégats cellulaires (102A, 102B) dans la ou les images de déphasage,
dans lequel l'échantillon est un échantillon de sang total ou un échantillon de fraction sanguine et l'identification des agrégats cellulaires (102A, 102B) dans la ou les images de déphasage comprend l'identification d'agrégats plaquettaires (102A) dans la ou les images de déphasage.

2. Procédé (800) selon la revendication 1, comprenant en outre la détermination d'un nombre total ou d'une fraction d'agrégats plaquettaires (102A) dans la ou les images de déphasage, en particulier dans lequel le procédé (800) comprend en outre l'utilisation du nombre total ou de la fraction d'agrégats plaquettaires (102) comme indicateur de complications d'un patient infecté, en particulier d'un patient atteint de Covid-19.

3. Procédé (800) selon la revendication 1 ou 2, dans lequel :
l'identification des agrégats cellulaires (102A, 102B) dans la ou les images de déphasage comprend la détermination d'un nombre de cellules dans l'agrégat cellulaire (102A, 102B) respectif ; et/ou
le procédé (800) comprend en outre la détermination d'un nombre ou d'une fraction d'agrégats plaquettaires comprenant au moins un nombre prédéfini de cellules, en particulier la détermination d'un nombre ou d'une fraction d'agrégats plaquettaires comprenant trois cellules ou plus.

4. Procédé (800) selon l'une quelconque des revendications précédentes, dans lequel l'identification des agrégats cellulaires (102A, 102B) dans la ou les images de déphasage comprend en outre l'identification d'agrégats leucocyte-plaquette (102B) dans la ou les images de déphasage, en particulier dans lequel le procédé comprend en outre :
la détermination d'un nombre total ou d'une fraction d'agrégats leucocyte-plaquette (102B) dans la ou les images de déphasage ; et/ou la détermination d'un nombre ou d'une fraction d'agrégats leucocyte-plaquette (102B) comprenant au moins un nombre prédéfini de cellules, en particulier la détermination d'un nombre d'agrégats leucocyte-plaquette (102B) comprenant trois cellules ou plus.

5. Procédé (800) selon la revendication 4, comprenant en outre la détermination d'un nombre ou d'une fraction d'agrégats leucocyte-plaquette (102B) comprenant au moins un nombre prédéfini de leucocytes, en particulier dans lequel :
le procédé (800) comprend la détermination d'un nombre ou d'une fraction d'agrégats leucocyte-plaquette (102B) comprenant deux leucocytes (104B) ou plus et/ou la détermination d'un nombre ou d'une fraction d'agrégats leucocyte-plaquette (102B) comprenant trois leucocytes (104B) ou plus ; et
la présence d'agrégats leucocyte-plaquette comprenant deux leucocytes ou plus et/ou la présence d'agrégats leucocyte-plaquette comprenant trois leucocytes ou plus est utilisée comme indicateur d'une infection, en particulier comme indicateur d'une infection virale et/ou d'une infection bactérienne.

6. Procédé (800) selon l'une quelconque des revendications précédentes, dans lequel le procédé (800) comprend en outre la détermination d'un nombre total ou d'une fraction de plaquettes agrégées qui sont contenues dans des agrégats cellulaires (102A, 102B) de tout type dans la ou les images de déphasage.

7. Procédé (800) selon l'une quelconque des revendications précédentes, dans lequel le procédé (800) comprend en outre :
la détermination d'une mesure de granularité à partir de la ou des images de déphasage, la mesure de granularité caractérisant une granularité d'une ou de plusieurs cellules dans la ou les images de déphasage ; et/ou
la détermination d'une distribution de taille d'une pluralité de cellules et/ou d'un ou de plusieurs paramètres relatifs à ladite distribution de taille à partir de la ou des images de déphasage.

8. Procédé (800) selon la revendication 7, dans lequel la mesure de granularité, la distribution de taille et/ou le ou les paramètres relatifs à ladite distribution de taille sont déterminés pour des cellules uniques et/ou agrégées d'un type particulier, de préférence pour des plaquettes uniques, pour des plaquettes dans des agrégats plaquettaires, pour des plaquettes dans des agrégats leucocyte-plaquette et/ou pour des plaquettes agrégées dans des agrégats cellulaires de tout type.

9. Procédé (800) selon l'une quelconque des revendications précédentes, dans lequel :
la suspension comprend en outre un fluide viscoélastique, en particulier dans lequel le fluide viscoélastique comprend un polymère à viscosité décroissante sous cisaillement ayant une masse moléculaire comprise entre 2 MDa et 10 MDa et dans lequel une fraction massique du polymère à viscosité décroissante sous cisaillement dans la suspension est inférieure à 0,2 % ; et/ou
le focalisation viscoélastique et/ou hydrodynamique est adaptée de sorte que des cellules uniques (104A, 104B) dans la suspension sont également focalisées dans le plan focal du microscope à contraste de phase quantitatif ; et/ou
la préparation de la suspension ne comprend pas une lyse des érythrocytes, une sphérisation des plaquettes et/ou des érythrocytes et/ou un marquage ou une coloration des cellules.

10. Procédé (800) selon l'une quelconque des revendications précédentes, dans lequel la prise de la ou des images de déphasage des cellules biologiques (104A, 104B) dans la suspension à l'aide du microscope à contraste de phase quantitatif (108) comprend la prise d'une première image de déphasage des cellules biologiques (104A, 104B) dans la suspension à une première vitesse d'écoulement de la suspension et/ou à un premier taux de cisaillement dans la suspension et la prise d'une seconde image de déphasage des cellules biologiques (104A, 104B) dans la suspension à une seconde vitesse d'écoulement de la suspension différente de la première vitesse d'écoulement et/ou à un second taux de cisaillement dans la suspension différent du premier taux de cisaillement.

11. Dispositif (100) de détection d'agrégats cellulaires (102A, 102B) de cellules biologiques (104A, 104B) à l'aide d'un procédé (800) selon l'une quelconque des revendications précédentes, le dispositif (100) comprenant :
un support (106) conçu pour recevoir un système microfluidique (200) comprenant un volume de mesure (202) ;
un microscope (108) conçu pour prendre des images de déphasage de cellules biologiques (104A, 104B) dans le volume de mesure (202) ;
une unité de microfluidique (120) conçue pour recevoir un fluide d'échantillon comprenant des cellules biologiques (104A, 104B) à partir d'un échantillon de sang, l'unité de microfluidique (120) étant conçue pour générer un écoulement (208A) du fluide d'échantillon à travers le volume de mesure (202) afin de focaliser viscoélastiquement et/ou hydrodynamiquement des agrégats cellulaires (102A, 102B) dans l'écoulement du fluide d'échantillon (208A) dans un plan focal du microscope (108) ; et
une unité de commande (124) conçue pour identifier des agrégats plaquettaires (102A) dans une image de déphasage de l'écoulement du fluide d'échantillon (208A) obtenue à partir du microscope (108).

12. Dispositif (100) selon la revendication 11, dans lequel l'unité de commande (124) est en outre conçue pour :
déterminer un nombre total ou une fraction d'agrégats plaquettaires (102) dans l'image de déphasage, un nombre ou une fraction d'agrégats plaquettaires comprenant au moins un nombre prédéfini de cellules dans l'image de déphasage et/ou un nombre total ou une fraction de plaquettes agrégées qui sont contenues dans des agrégats cellulaires (102A, 102B) de tout type dans l'image de déphasage ; et/ou
identifier des agrégats leucocyte-plaquette (102B) dans l'image de déphasage, en particulier dans lequel l'unité de commande (124) est conçue pour déterminer un nombre total ou une fraction d'agrégats leucocyte-plaquette (102B) dans l'image de déphasage, un nombre ou une fraction d'agrégats leucocyte-plaquette (102B) comprenant au moins un nombre prédéfini de cellules dans l'image de déphasage et/ou un nombre ou une fraction d'agrégats leucocyte-plaquette (102B) comprenant au moins un nombre prédéfini de leucocytes dans l'image de déphasage.

13. Dispositif (100) selon la revendication 11 ou 12, dans lequel l'unité de commande (124) est en outre conçue pour déterminer une distribution de taille d'une pluralité de cellules, un ou plusieurs paramètres relatifs à ladite distribution de taille et/ou une mesure de granularité à partir de l'image de déphasage, la mesure de granularité caractérisant une granularité d'une ou de plusieurs cellules dans l'image de déphasage.

14. Dispositif (100) selon l'une quelconque des revendications 11 à 13, dans lequel le fluide d'échantillon comprend en outre un fluide viscoélastique, en particulier dans lequel le fluide viscoélastique comprend un polymère à viscosité décroissante sous cisaillement ayant une masse moléculaire comprise entre 2 MDa et 10 MDa et une fraction massique du polymère à viscosité décroissante sous cisaillement dans 5ef luide d'échantillon est inférieure à 0,2 % ; le dispositif (100) comprenant de préférence en outre une unité de préparation d'échantillon (122) conçue pour fournir 5 ef luide viscoélastique comprenant le polymère à viscosité décroissante sous cisaillement ayant une masse moléculaire comprise entre 2 Mda et 10 Mda afin de préparer 5ef luide d'échantillon comprenant des cellules biologiques (104A, 104B) à partir de l'échantillon et du fluide viscoélastique, dans lequel la fraction massique du polymère à viscosité décroissante sous cisaillement dans 5ef luide d'échantillon est inférieure à 0,2 %.

15. Dispositif (100) selon l'une quelconque des revendications 11 à 14, dans lequel l'unité de commande (124) est conçue pour exécuter le procédé (800) selon l'une quelconque des revendications 1 à 10.
